# EUROPEAN PATENT SPECIFICATION

(11) **EP 1 070 094 B1**
(45) Date of publication and mention of the grant of the patent: **08.08.2007**
(21) Application number: 99941980.7
(22) Date of filing: 29.07.1999
(51) Int. Cl.: C08G 73/10, C09D 5/44, D06M 10/10, D06M 15/59

(54) **A METHOD FOR MAKING THERMOPLASTIC COATED ARTICLES USING CATAPHORETIC ELECTRODEPOSITION**
VERFAHREN ZUR HERSTELLUNG VON BESCHICHTETEN THERMOPLASTGEGENSTÄNDEN UNTER VERWENDUNG VON KATAPHORISCHER ELEKTROTAUCHLACKIERUNG
PROCEDE PERMETTANT DE FABRIQUER DES ARTICLES ENDUITS DE RESINE THERMOPLASTIQUE AU MOYEN D'UNE ELECTRODEPOSITION CATAPHORETIQUE

(30) Priority: 31.07.1998 US 127021; 31.07.1998 US 127024
(43) Date of publication of application: 24.01.2001
(73) Proprietor: GENERAL ELECTRIC COMPANY, Schenectady, NY 12345 (US)
(72) Inventor: PUYENBROEK, Robert, NL-4617 ND Bergen op Zoom (NL); WASCHER, Uwe, Siegfried, B-2950 Kapellen (BE); SCHUE, François, Guy-Marie, 34000 Montpellier Cedex (FR); SCHUE, Rossitza, 34000 Montpellier Cedex (FR); QARIOUH, El Houssain, F-34090 Montpellier Cedex (FR); BAILLY, Christian, Maria, Emile, Altamont, NY 12009 (US); DE WIT, Gerrit, NL-4641 RX Ossendrecht (NL); LENSVELT, Kees, NL-4611 JZ Bergen op Zoom (NL)
(74) Representative: Szary, Anne Catherine
(86) International application number: PCT/US1999/017208
(87) International publication number: WO 2000/006630

(56) References cited:
- DE-A- 4 335 325
- US-A- 4 092 300
- PATENT ABSTRACTS OF JAPAN vol. 005, no. 016 (C-041), 30 January 1981 (1981-01-30) & JP 55 144002 A (SEKISUI CHEM CO LTD), 10 November 1980 (1980-11-10)

## Description

### FIELD OF THE INVENTION

The invention relates to thermoplastic coated articles made via a cataphoretic electrodeposition process.

### BRIEF DESCRIPTION OF THE RELATED ART

Polyetherimide resins have been applied to substrates utilizing various techniques including anionic electrodeposition. Generically, anionic, also known as anodic, electrodeposition chemically combines resin R with ion forming group, e.g., -COOH, to form acidic resin RCOOH, which reacts bases to form macro-ions RCOO- for anodic deposition. Essentially, two electrodes inserted into an aqueous dispersion of film forming macro-ions (RCOO-) and counter ions (Y⁺) cause water insoluble resin (RCOOH) to deposit on the positive electrode (anode), while water soluble YOH forms on the negative electrode (cathode). During this process metal ions freed from the substrate enhance the precipitation of the polyanion.

ROOH + YOH aq.- RCOO- + Y⁺ + H₂O

where: ROOH is the resin
YOH = external solubilizer
RCOO- = film forming macro-ions
Y⁺ = counter ions
and the electrode reactions are:

2H⁺ + 2OH⁻ - H₂O + O + 2H⁺ + 2e⁻ + RCOO⁻ -

RCOOH

Me - Meⁿ⁺ + ne⁻

The disadvantages of this process range from the dissolution of the metal substrate, need for corrosion protection pretreatment, discoloration caused by metal ions to sensitivity to alkali due to non-consumed carboxylic groups

(-COOH).

Unlike anodic electrodeposition, cathodic electrodeposition produces a product with no dissolution of the substrate, no staining, and better alkali resistance. This process employs the polycation, typically converting tertiary amines (NR₃) to cations (NR₄⁺) using aqueous acid and electrode reaction.

R₃N + HX - R₃NH⁺ + X

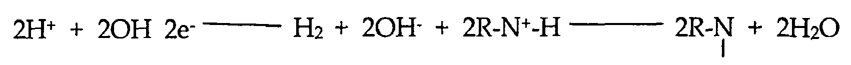

where: R₃N = water insoluble oligomer
HX = external solubilizer
R₃NH⁺ = film forming macro-ions
X = counter ions

Although cathodic electrodeposition solves some of the problems of anodic electrodeposition, this process has not been commercially viable for polyetherimide compositions due to poor emulsion stability, limited storage abilities, solvent toxicity and irritating odor, and low throwing power, i.e., the ability of the coating to uniformly coat remote areas of a substrate with the desired thickness, resulting in limited consistent layer thickness.

Coating processes for fiber components, particularly coatings with polyetherimide, have proven to be exceptionally difficult with complex geometries, i.e., hollow or complex substrates. Typically complex and hollow components are based upon thermoset materials, such as unsaturated polyesters and epoxy resins, having a high glass temperature because of the need for complete impregnation of the fibers in order to produce a substantially void-free composite, whereby complete impregnation is only attained with low viscosity polymers. However, the brittle nature of the thermoset systems, low damage tolerance of the components, and the limitations relating to recycling force the industry to utilize thermoplastics having difficult production requirements. Consequently, conventional processes for forming polyetherimide carbon fiber composites have been limited to two dimensional, regular surfaces. Furthermore, these processes, the melt process, dry powder process, and solution process, typically employ toxic or otherwise environmentally harmful chemicals or processes which require expensive secondary operations and long cycle times.

The melt process comprises applying a molten thermoplastic material to the fibers by either using a cross-head extruder which feeds the molten material to a die directed through which the fibers pass, or the fibers pass through a molten material bath. Disadvantages of this process include fiber damage caused by the forces exerted on the fibers during processing and difficulty in impregnating in small quantities and in homogeneously impregnating tightly held fibers.

The dry powder process comprises sintering very fine, low particle size thermoplastic material into the fibers. This process requires long cycle times and expensive secondary operations such as grinding procedures to obtain sufficiently small polymer particles.

In the solution process, the fibers are impregnated with a low viscosity solution of the thermoplastic polymer. With this process, during composite consolidation, the volatilizing solvent, which should be recycled, can form voids.

With the melt process, dry powder process, and solution process, once the fibers were coated with the thermoplastic polymer to form a pre-preg, a typical thermoforming process, such as vacuum/ pressure molding, hydroforming, stamp forming, and autoclave forming, would then be employed to convert the fabricated pre-preg into complex shapes.

A precise overview of the different processes in fabricating pre-pregs and composites is given by M. Hou, Lin Ye & Yiu-Wing May in "Plastics, Rubber and Composites Processing and Applications", vol. 23, No. 5,1995, pp. 279-293, and references in this publication. M. Hou et al. also report results on the influence of processing on properties of "Carbon Fiber Polyetherimide Composites," Journal of Reinforced Plastics and Composites, Vol. 15, p.117,1996.

What is needed in the art is a high stability emulsion, and a cost effective, simplified, environmentally friendly process for forming complex geometry articles.

### SUMMARY OF THE INVENTION

The present invention relates to a method for making an emulsion for a cataphoretic electrodeposition process for forming a thermoplastic coated substrate, and the process itself. This process comprises: forming a thermoplastic emulsion, comprising the steps of: dispersing a thermoplastic resin in a solvent and a substantially water insoluble cosolvent, said thermoplastic resin having at least one imide linkage; reacting a ring opening agent with said imide linkage, wherein amine groups are formed; neutralizing said amine groups with a neutralization agent to form a quaternized mixture; forming the thermoplastic emulsion by adding water to said quaternized mixture; inserting an anode into said emulsion; inserting a substrate into said emulsion, wherein said substrate preform functions as a cathode; applying an electrical current to said emulsion; forming a thermoplastic cation; and reacting said thermoplastic cation at said cathode to form a thermoplastic species which coats said substrate.

The method of making the thermoplastic emulsion comprises: dispersing thermoplastic resin in a solvent and a substantially water insoluble cosolvent, said thermoplastic resin having at least one imide linkage; reacting a ring opening agent with said imide linkage to form amine groups; neutralizing said amine groups with a neutralization agent to form a quaternized mixture; and mixing water into said quaternized mixture to form the emulsion.

### DETAILED DESCRIPTION OF THE INVENTION

In a preferred embodiment, the fibers are cataphoretically coated in a thermoplastic emulsion which comprises, thermoplastic resin having imide linkages, a ring opening agent, a neutralization agent, a solvent, a cosolvent, and water. The coating process comprises dissolving the thermoplastic in solvent, adding the cosolvent, opening imide linkages with the ring opening agent, quaternizing the amine groups with the neutralization agent, and finally adding water to form the aqueous thermoplastic emulsion. The fibers and an anode are then placed in the emulsion, a current is applied, and the thermoplastic reacts to coat the substrate.

The emulsion comprises up to about 10 volume percent (vol%) thermoplastic resin, up to about 5 vol% ring opening agent, up to about 5 vol% neutralization agent, up to about 20 vol% solvent, and up to about 20 vol% cosolvent, balance water, with about 3 vol% to about 8 vol% thermoplastic resin, about 0.2 vol% to about 3 vol% ring opening agent, about 0.3 vol% to about 3.5 vol% neutralization agent, about 8 vol% to about 15 vol% solvent, and about 9 vol% to about 15 vol% cosolvent, balance water preferred, and about 4 vol% to about 7 vol% thermoplastic resin, about 0.5 vol% to about 1.5 vol% ring opening agent, about 0.5 vol% to about 2 vol% neutralization agent, about 10 vol% to about 13 vol% solvent, and about 10 vol% to about 12.5 vol% cosolvent, balance water especially preferred.

The thermoplastic resin can be any thermoplastic resin having an imide linkage and which is soluble in a solvent which will not adversely effect the substrate. Generally, polyimides are used, such as poly(amic acids), poly(urethane imides), poly(amide imides), polyetherimide (including, but not limited to, halogenated poly(etherimide)), poly(thioether imide sulfones), among others and combinations thereof, with polyetherimide preferred. The thermoplastic resin component of the emulsion can be a mixture of a thermoplastic resin having an imide linkage with one or more other compounds, such as epoxies, ketones, and other compounds which do not adversely effect the substrate or the coating properties, or the cataphoretic electrodeposition process.

The cataphoretic electrodeposition process of the present invention will be described in relation to polyetherimide. It is understood that when thermoplastic resins, other than polyetherimide, are employed, appropriate solvents and cosolvents compatible therewith will also be employed as can readily be determined by an artisan based upon the teachings herein.

Polyetherimide resins suitable for use as the polyetherimide resin component of the emulsion of the present invention are any known polyetherimide compound, including those whose preparation and properties have been described in U.S. Patent Nos. 3,803,085 and 3,905,942,

In a preferred embodiment, the polyetherimide resin component of the present invention contains from greater than 1 to 1000 or more, preferably from 10 to 1000, structural units of the formula (I): 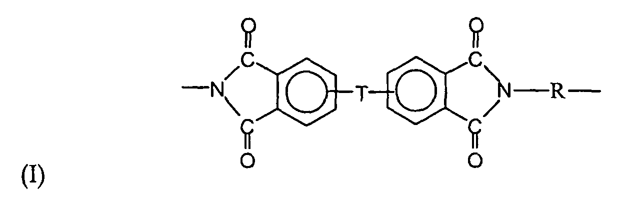 wherein the divalent T moiety bridges the 3,3', 3,4', 4,3', or 4,4' positions of the aryl rings of the respective aryl imide moieties of formula (I); T is -O- or a group of the formula -O-Z-O- ; Z includes, but is not limited to, a divalent radical of formulae (II): 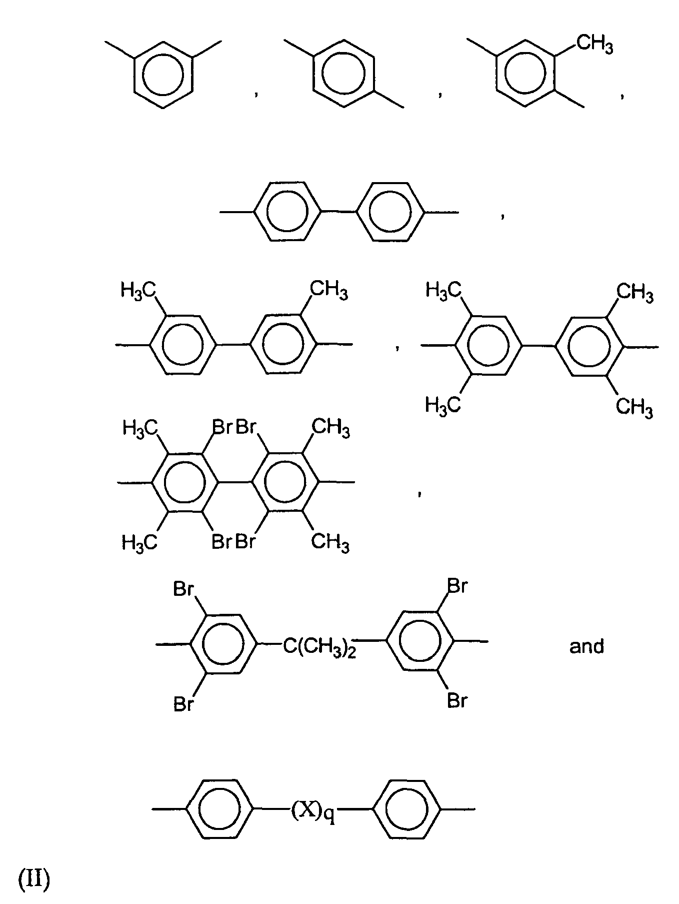 wherein X is a member selected from the group consisting of divalent radicals of the formulae (III): 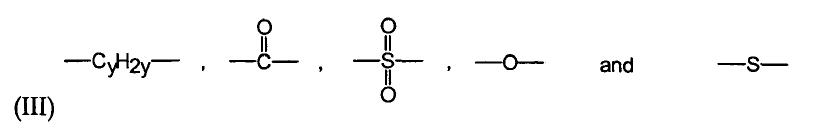 wherein y is an integer from 1 to about 5, and q is 0 or 1; R is a divalent organic radical including, but is not limited to, (a) aromatic hydrocarbon radicals having from 6 to about 20 carbon atoms and halogenated derivatives thereof, (b) alkylene radicals having from 2 to about 20 carbon atoms, (c) cycloalkylene radicals having from 3 to about 20 carbon atoms, and (d) divalent radicals of the general formula (IV): 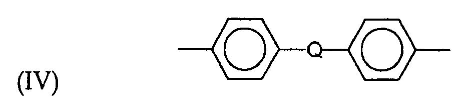 where Q includes, but is not limited to, the formulae (V): 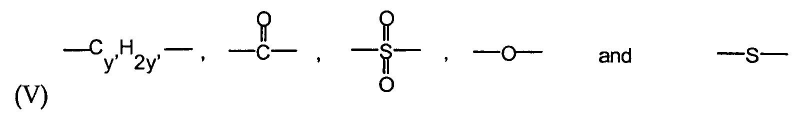 where y' is an integer from about 1 to about 5.

In one embodiment, the polyetherimide resin may be a copolymer which, in addition to the etherimide units described above, further contains polyimide repeating units of the formula (VI): 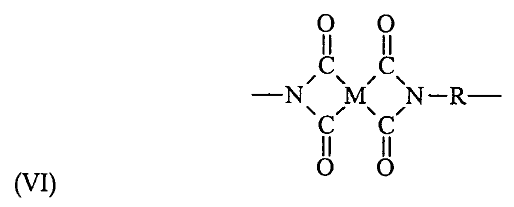 wherein R is as previously defined for formula (I) and M includes, but is not limited to, the formula (VII), (VIII, and (IX):

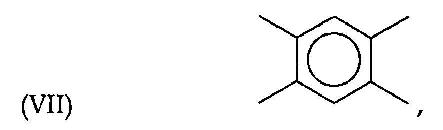

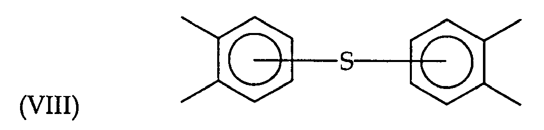

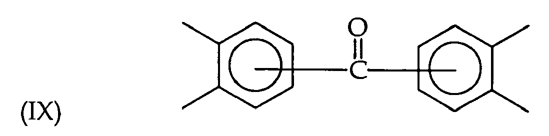

Polyetherimide resins are made by known methods, such as, for example, those disclosed in U.S. Patent Nos. 3,847,867, 3,814,869, 3,850,885, 3,852,242 3,855,178 and 3,983,093.

In a preferred embodiment, the polyetherimide resin is made by the reaction of an aromatic bis(ether anhydride) of the formula (X): 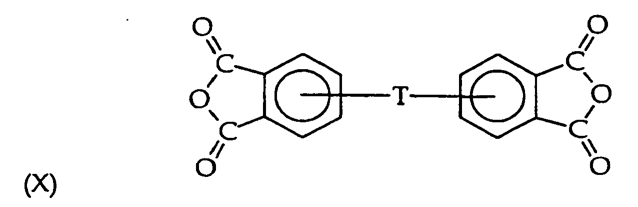 with an organic diamine of the formula (XI):

(XI) H₂N-R-NH₂

wherein T and R are defined as described above in formula (I). In general the reactions can be carried out employing well-known solvents, for example, o-dichlorobenzene, m-cresol/toluene and the like to effect interaction between the anhydride of formula (X) and the diamine of formula (XI), at temperatures from about 100°C to about 250°C.

Alternatively, the polyetherimide resin can be prepared by melt polymerization of aromatic bis(ether anhydride)s and diamines accomplished by heating a mixture of the ingredients at elevated temperatures with concurrent stirring. Generally melt polymerizations employ temperatures between about 200°C and 400°C. Chain stoppers and branching agents may also be employed in the reaction.

Examples of specific aromatic bis(ether anhydrides) and organic diamines are disclosed, for example, in U.S. Patent Nos. 3,972,902 and 4,455,410.

Illustrative examples of aromatic bis(ether anhydride)s of formula (X) include: 2,2-bis(4-(3,4-dicarboxyphenoxy)phenyl)propane dianhydride; 4,4'-bis(3,4-dicarboxyphenoxy)diphenyl ether dianhydride; 4,4'-bis(3,4-dicarboxyphenoxy)diphenyl sulfide dianhydride; 4,4'-bis(3,4-dicarboxyphenoxy)benzophenone dianhydride; 4,4'-bis(3,4-dicarboxyphenoxy)diphenyl sulfone dianhydride; 2,2-bis[4-(2,3-dicarboxyphenoxy)phenyl]propane dianhydride; 4,4'-bis(2,3-dicarboxyphenoxy)diphenyl ether dianhydride; 4,4'-bis(2,3-dicarboxyphenoxy)diphenyl sulfide dianhydride; 4,4'-bis(2,3-dicarboxyphenoxy)benzophenone dianhydride; 4,4'-bis(2,3-dicarboxyphenoxy)diphenyl sulfone dianhydride; 4-(2,3-dicarboxyphenoxy)-4'-3,4-dicarboxyphenoxy)diphenyl-2,2-propane dianhydride; 4-(2,3-dicarboxyphenoxy)-4'-(3,4-dicarboxyphenoxy)diphenyl ether dianhydride; 4-(2,3-dicarboxyphenoxy)-4'-(3,4-dicarboxyphenoxy)diphenyl sulfide dianhydride; 4-(2,3-dicarboxyphenoxy)-4'-(3,4-dicarboxyphenoxy)benzophenone dianhydride and 4-(2,3-dicarboxyphenoxy)-4'-(3,4-dicarboxyphenoxy)diphenyl sulfone dianhydride, as well as various mixtures thereof.

A preferred class of aromatic bis(ether anhydride)s included by formula (X) above includes compounds wherein T is of the formula (XII): 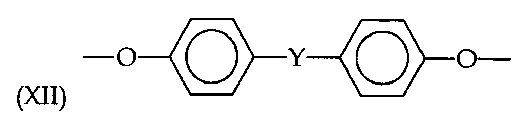 and the ether linkages, for example, are preferably in the 3,3', 3,4', 4,3', or 4,4' positions, and mixtures thereof and wherein each Y includes, but is not limited to, the formulae (XIII):

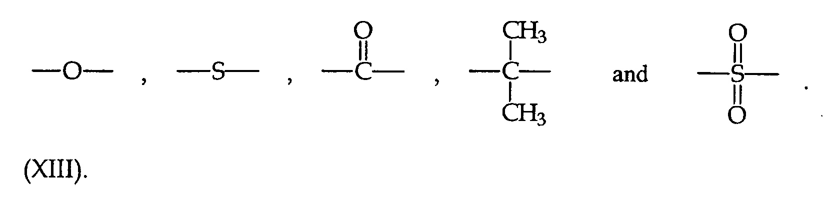

When polyetherimide/polyimide copolymers are employed, a dianhydride, such as pyromellitic anhydride, is used in combination with the bis(ether anhydride).

The bis(ether anhydride)s can be prepared by the hydrolysis, followed by dehydration, of the reaction product of a nitro substituted phenyl dinitrile with a metal salt of dihydric phenol compound in the presence of a dipolar, aprotic solvent.

Suitable organic diamines of formula (XI) include, for example: m-phenylenediamine; p-phenylenediamine; 4,4'-diaminodiphenylpropane, 4,4'-diaminodiphenylmethane (commonly named 4,4'-methylenedianiline); 4,4'-diaminodiphenyl sulfide; 4,4'-diaminodiphenyl sulfone; 4,4'-diaminodiphenyl ether (commonly named 4,4'-oxydianiline); 1,5-diaminonaphthalene; 3,3-dimethylbenzidine; 3,3-dimethoxybenzidine; 2,4-bis(beta-amino-t-butyl)toluene; bis(p-beta-amino-t-butylphenyl)ether; bis(p-beta-methyl-o-aminophenyl)benzene;1,3-diamino-4-isopropylbenzene; 1,2-bis(3-aminopropoxy)ethane; benzidine; m-xylylenediamine; 2,4-diaminotoluene; 2,6-diaminotoluene; bis(4-aminocyclohexyl)methane; 3-methylheptamethylenediamine; 4,4-dimethylheptamethylenediamine; 2,11-dodecanediamine; 2,2-dimethylpropylenediamine; 1,18-octamethylenediamine; 3-methoxyhexamethylenediamine; 2,5-dimethylhexamethylenediamine; 2,5-dimethylheptamethylenediamine; 3-methylheptamethylenediamine; 5-methylnonamethylenediamine; 1-4-cyclohexanediamine; 1,18-octadecanediamine; bis(3-aminopropyl)sulfide; N-methyl-bis(3-aminopropyl)amine; hexamethylenediamine; heptamethylenediamine; nonamethylenediamine; decamethylenediamine and mixtures of such diamines.

Illustrative of a particularly preferred polyetherimide resin falling within the scope of formula (I) is one comprising repeating units wherein R is paraphenylene, metaphenylene, or mixtures of paraphenylene and metaphenylene and T is a group of the formula -O-Z-O- wherein Z has the formula (XIV): 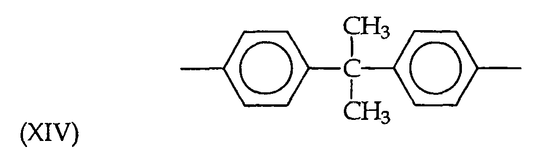 and wherein the divalent group (XIV) preferably bridges the 3,3' positions of the aryl rings of the respective aryl imide moieties of formula (I).

In another embodiment, the polyetherimide resin may be a copolymer, a siloxane polyetherimide copolymer made by condensation of 2,2-bis(2,3-dicarboxy phenoxy phenol)propane dianhydride with metaphenylene diamine and an aminopropyl-terminated D₁₀ polydimethylsiloxane, containing 34 weight percent (wt%) structural units derived from the polydimethylsiloxane and having a molecular weight of about 60,000 grams per mole (g/mole).

Generally, useful polyetherimide resins have an intrinsic viscosity [η] greater than about 0.2 deciliters per gram, preferably of from about 0.35 to about 0.7 deciliters per gram measured in m-cresol at 25°C.

In a preferred embodiment, the polyetherimide resin of the present invention has a weight average molecular weight of from about 10,000 to about 150,000 g/mole, as measured by gel permeation chromatography, using a polystyrene standard.

During the formation of the emulsion, the polyetherimide resin is dissolved in a solvent capable of dissolving that particular polyetherimide resin. One example of a conventional solvent useful with the present invention is an organic solvent such as N-methylpyrolidone. Other conventional solvents capable of dissolving the polyetherimide resin can alternatively be employed.

As with the solvent, the cosolvent should be a solvent for polyetherimide, be a liquid at a temperature of 0°C, should be miscible with the solvent over a large temperature range, i.e., up to about 150°C, with up to 250°C preferred, and produce a ratio of solvent/ cosolvent in the deposited coating of less than about 1. The cosolvent should be insoluble or only slightly soluble in water, preferably a solubility in water below about 5.5 grams per liter (g/l), in order to improve the emulsion stability and to obtain high throwing power properties (i.e. a mean voltage approaching zero, or a mean voltage of about zero) and to reduce water content in the deposited layers. Table 1 shows the immisibility point and coupling coefficient of the cosolvent for a 20 ml N-methylpyrrolidone-water (50/50) mixture with the coupling coefficient expressed as the amount of mixture divided by the amount of cosolvent necessary to obtain a heterogeneous mixture.

| Table 1 | | |
|---|---|---|
| Cosolvent | Volume (ml) added to immiscibility point | Coupling Coefficient |
| | | |
| 2-ethoxyphenol | 8.9 | 2.3 |
| methyl phenyl ether (anisole) | 1.5 | 13.3 |
| 2-methoxy phenyl acetone | 3.7 | 5.4 |
| acetophenone | 5.3 | 3.8 |

Preferably the cosolvent additionally has a coupling coefficient of about 3.7 or greater in N-methylpyrolidone. Possible cosolvents, include, but are not limited to, aromatic ethers, ketones, etherketones, arylallyl ketones, arylalkylketones, aryletheralcohols, ketones, phenols, and ether containing solvents, among others, with methyl phenyl ether (anisole) and 2-methoxy phenyl acetone preferred. As can be seen from Table 2, the stability of the emulsion correlates to the water solubility of the cosolvent; higher water solubility cosolvent produces a lower stability of the emulsion or incomplete emulsification.

| TABLE 2 | | |
|---|---|---|
| Cosolvent | Stability | |
| | room temperature (RT) °C | 4°C |
| 2-ethoxyphenol | Incomplete emulsification | |
| 2-methoxy benzyl alcohol | Incomplete emulsification | |
| methyl phenyl ether (anisole) | 7 days | 18 days |
| 2-methoxy phenyl acetone | 4 days | 10 days |
| Acetophenone | 2 days | 7 days |

Table 3 establishes the effects of the cosolvent on the yield of the polyetherimide in the final coating.

| TABLE 3 | | | | |
|---|---|---|---|---|
| Co-solvent | | acetophenone | Methylphenyl ether | 2-methoxy phenyl acetone |
| Modification Percentage | | 70 | 70 | 70 |
| Quaternization Percentage | | 50 | 50 | 50 |

| Voltage volts (V) | Time seconds (sec) | Yield milligrams per square centimeter (mg/cm²) | | Yield (mg/cm²) |
|---|---|---|---|---|
| 45 V | 20 | 1.1 | 1.3 | 1.4 |
| | 40 | 1.7 | 1.4 | 1.6 |
| | 60 | 2.1 | 1.5 | 1.8 |
| | 80 | 3 | 1.6 | 1.9 |
| 68 V | 20 | 1.5 | 1.4 | 1.6 |
| | 40 | 1.9 | 1.5 | 2.1 |
| | 60 | 2.8 | 1.6 | 2.3 |
| | 80 | 3.5 | 1.8 | 2.4 |
| 80 V | 20 | 0.9 | 1.3 | 1.6 |
| | 40 | 1.3 | 1.5 | 2 |
| | 60 | 2.1 | 1.8 | 2.3 |
| | 80 | 2.8 | 2.1 | 2.5 |
| 120 V | 20 | 1.9 | 1.3 | 2.1 |
| | 40 | 3.2 | 1.4 | 2.8 |
| | 60 | 4.4 | 1.8 | 3 |
| | 80 | 6 | 2 | 3.5 |

Table 4 illustrates the effect of cosolvent on final amperage (current at the end of the coating period) and the time necessary to approach zero.

| Table 4 | | | |
|---|---|---|---|
| Cosolvent | acetophenone | Methylphenyl ether | 2-methoxy phenyl acetone |
| Modification Percentage | 70 | 70 | 70 |
| Quaternization Percentage | 50 | 50 | 50 |

| Voltage (V) | Current density after 300 sec. of electrodeposition milliamperes per square centimeter (mA/cm²) | | |
|---|---|---|---|
| 20 V | <0.5 [80] | <0.5 [40] | <0.5 [80] |
| 45 V | <0.5 [200] | <0.5 [45] | <0.5 [80] |
| 68 V | ~2 | <0.5 [50] | <0.5 [100] |
| 80 V | ~2 | <0.5 [55] | <0.5 [125] |
| 120 V | ~5 | <0.5 [125] | <0.5 [200] |
| Number in brackets: Amount of seconds necessary to get below 0.5 mA/cm² | | | |

In the preparation of the emulsion, the anhydride groups of the polyetherimide are opened using a ring opening agent. This ring opening agent can be any compound capable of ring opening the imide groups of the polyetherimide, with amines preferred. These amines are secondary or tertiary amines which are miscible with water, and have sufficiently high boiling points to avoid volatilization under standard preparation and storage conditions (i.e. about 1 atmosphere and 25°C), with a boiling point above about 90°C preferred and a boiling point above about 110°C especially preferred. Preferably these amines additionally have hydrophilic groups, such as alcoholic groups. N-methylpiperazine is preferred, with 2-(1-piperazinyl)ethanol (HEP) especially preferred because they produce high polyetherimide yields, efficiently react with polyetherimide, and excess thereof is easily removed during curing of the polyetherimide coating.

The ring opening agent reacts with the imide linkage of the polyetherimide to form functionalized amine-acid groups. The amine groups are quaternized using a neutralization agent. Neutralization agents include acids having a sufficient acid strength to attain the desired quaternization. Possible neutralization agents include, but are not limited to, mono-acids having an acid strength Kₐ of about 10⁻⁵ or greater. Other acids can be employed however additional acid groups on the neutralization agent reduces the stability of the emulsion. Preferably lactic acid or glycolic acid is employed because the strong solvation of the counter ion of these acids induces an improved hydrophilic character resulting in migration to the water/solvent/cosolvent interphase, providing thereby a stable emulsion. Tables 5 and 6 show the improved stability yields of the emulsion and subsequently deposited coating when using lactic acid or glycolic acid as the neutralization agent.

| TABLE 5 | | | | |
|---|---|---|---|---|
| Acid | Degree of Quaternization (%) | | | |
| | 50 | | 100 | |
| | room temp. (°C) | 4°C | room temp. (°C) | 4°C |
| propionic | Break down during the preparation | | | |
| glycolic | 4 days | 21 days | 2 days | 5 days |
| malonic | Break down during the preparation | | | |
| malaic(-) | Break down during the preparation | | | |
| tartaric(+) | Break down during the preparation | | | |
| citric | Break down during the preparation | | | |
| phophoric | Break down during the preparation | | | |
| Lactic | 2 days | 7 days | Break down...... | |

| TABLE 6 | | | |
|---|---|---|---|
| Neutralization Agent | | Lactic acid | Glycolic acid |
| Modification Percentage | | 70 | 70 |
| Quaternization Percentage | | 50 | 60 |
| Voltage (V) | Time (sec) | Yield (mg/cm²) | |
| 80V | 20 | 0.9 | 1.5 |
| | 40 | 1.5 | 2.5 |
| | 60 | 2.3 | 3.4 |
| | 100 | 3.5 | 5.2 |
| 125V | 20 | 1.6 | 2.2 |
| | 40 | 3.2 | 4.2 |
| | 60 | 4.4 | 6 |
| | 100 | 7.5 | 9.6 |

The preparation of the emulsion of the present invention is normally achieved by combining the components under conditions suitable for the formation of an emulsion. Suitable conditions include, for example, solution blending or melt mixing in single or twin screw type extruders, mixing bowl, or similar mixing devices which can apply a shear to the components. Twin screw extruders are often preferred due to their more intensive mixing capability over single screw extruders. It is often advantageous to apply a vacuum to the melt through at least one vent port in the extruder to remove volatile impurities in the composition.

Essentially, under an inert atmosphere (i.e. nitrogen, argon, or another), a polyetherimide resin is preferably dissolved in a mixture of solvent and cosolvent, while heating the mixture. Although this process can be accomplished at room temperature (RT), heating the mixture is preferred in order to facilitate dissolution of the polyetherimide. After completion of dissolution, a ring opening agent is dissolved in a cosolvent and mixed into the dissolution. The dissolution is then preferably heated to a sufficient temperature, for a sufficient period of time to react the ring opening agent with the desired amount of anhydride groups of the polyetherimide to form amine groups. The desired amount of anhydride groups reacted with the ring opening agent is based upon the particular application, with reaction of substantially all of the anhydride groups possible, between about 50% and about 80% preferred, and about 60% to about 75% especially preferred.

After formation of the amine groups, a mixture of cosolvent and neutralization agent is added to quaternize the amine groups. The amount of neutralization agent utilized is based upon the desired amount of amine groups to quaternize. For example, to quaternize 50 vol.% of the amine groups, a 50 vol.% aqueous solution of the neutralization agent is mixed into the dissolution. Preferably, up to about 75% or more of the amine groups are quaternized, with about 42% to about 55% especially preferred. Finally, sufficient water, preferably demineralized water, is added to attain the desired percentage of polyetherimide in aqueous emulsion.

Note, it is preferred to mix the ring opening agent and neutralization agent in the cosolvent prior to addition to the dissolution, and to utilize some cosolvent in the dissolution in order to maintain and ensure emulsion stability. Solvent can be utilized in conjunction with or instead of the cosolvent so long as the solvent:cosolvent ratio is maintained below about 1; at ratios above about 1 the emulsion becomes unstable.

Once the emulsion is prepared, the substrate can be coated with the emulsion utilizing a cataphoretic electrodeposition process. The substrate can be a sheet, sphere, cube, or fibers such as woven or non-woven fabrics, unidirectional tapes, random fiber sheets, among others having any length or diameter desired to form the particular component, or other geometry. Possible substrate materials include any material which is either conductive or has a conductive coating and which is compatible with the emulsion, including aluminum, platinum, substrates, glass, carbon, and mixtures thereof preferred, such as a metal coated glass. Possible coatings include conductive coatings such as metal coatings, including, but are not limited to, nickel, iron, steel, copper, and others, and alloys thereof.

Prior to coating of the substrate, it is preferred to pretreat the substrate. Pretreatment of the substrate improves coating adhesion and therefore the mechanical properties of the final composite and facilitates homogeneous thickness of the wetted layers. For examples, for fibers and some other substrates, possible pretreatments include, but are not limited to, pretreating with good solvents for the polyetherimide, such as N-methylpyrrolidone and chloroform, among others. One possible pretreatment method comprises rinsing or soaking the fibers in the solvent. Meanwhile, a possible pretreatment for a disk, such as an aluminum disk, is phosphite, as well as other commonly used pretreatments for aluminum substrates. Coating of the substrate with the polyetherimide aqueous emulsion then comprises inserting an anode, i.e. a stainless steel or other rod, and the substrate (cathode) into the emulsion and applying a voltage. The voltage can be up to about 100 volts (V), with about 20 V to about 60 V preferred. As can be seen from Tables 7 and 8, the voltage applied directly effected the yield and the wetting/impregnation quality.

| TABLE 7 | | | | |
|---|---|---|---|---|
| | Voltage (V) | | | |
| Deposited Mass (mg/cm²) | 20 | 40 | 60 | 80 |
| | 7.5 | 13.1 | 22.5 | 25 |

| TABLE 8 | | | |
|---|---|---|---|
| Voltage (V) | Deposition Time (sec) | Yield (mg/cm²) | Wetting Quality |
| 20 | 360 | 11.4 | weak |
| 40 | 180 | 13.1 | fair |
| 60 | 100 | 13.1 | good |
| 80 | 60 | 12 | very good |

After completion of the deposition process, the coated substrate can be rinsed, such as with de-ionized water or other inert liquid, to remove any organic substances which may be present. Once rinsed, the polyetherimide can be cured at elevated temperatures. The temperature should be sufficient to cure the polyetherimide within the cure period, while not adversely effecting the substrate. Typically, the temperature is between about 250°C and 300°C for up to about 30 minutes, with about 15 minutes to about 20 minutes preferred.

### Example 1

The following example has been used to produce polyetherimide coated fibers of the present invention using the stable polyetherimide emulsion.

In a 500 milliliter (ml) reaction flask 80 grams (g) of polyetherimide resin made by condensation of 2,2-bis(2,3-dicarboxy phenoxy phenol)propane dianhydride with metaphenylene diamine and having a weight average molecular weight of about 55 x 10³ g/ mole was dissolved in 160 ml N-methyl pyrolidinone and 20 ml cosolvent by stirring the mixture while heating to between 85°C to 95°C under a nitrogen environment. Once the polymer was dissolved 18.9 g ring opening agent and 60 ml cosolvent were added at a rate of 1 ml/min. while vigorously stirring and maintaining the temperature between 85°C to 95°C. After the addition, the mixture was heated to 110°C for two hours to form a 70% amine modified polymer solution.

Next, 50 vol% of the amine groups were quaternized via stirring 19.9 g cosolvent and an equal molar amount of a 50% aqueous solution of the neutralization agent (i.e., 4.2 g of a 50% aqueous solution of glycolic acid) into 100 g of the polymer solution. A 6 wt% polyetherimide aqueous emulsion was then formed by slowly adding 259.9 g of demineralized water to the quaternized solution.

Electrodeposition of the polyetherimide aqueous emulsion comprised inserting a stainless steel rod (anode) and carbon fiber fabric (cathode) into the emulsion, and applying a voltage.

After deposition process, the impregnated fabric was rinsed with de-ionized water and cured at elevated temperatures, between about 250°C and 300°C for 15 to 20 minutes.

### Example 2

The following example has been used to produce a polyetherimide coated aluminum media disk of the present invention (having the coating on both sides of the disk) using the stable polyetherimide emulsion.

A 6 wt% polyetherimide aqueous emulsion was first formed in accordance with Example 1. A 10 cm in diameter, 0.6 mm thickness disk (cathode) and two disks of similar dimensions (anode) were immersed in the emulsion, with the cathode disposed between the two anodes. (Note, it is preferable for the anode(s) to have substantially the same surface density as the cathode surface to be coated.) The anodes and cathode where connected to an electrical source and current of 4 amps (a voltage of about 30 volts) was applied across the anodes. After the deposition process, the coated disk was rinsed with de-ionized water and cured in a nitrogen atmosphere for 24 hours at room temperature 30 minutes at 160°C and 2 hours at 250°C.

The resulting disk had a thickness of 4 - 7 µm, a Rₐ (a statistical roughness standard) of 0.12 - 0.20 µm, and excellent metal adhesion (peel test), scratch resistance (ISO 1518), and tensile hardness (NEN5350).

| **Thickness** | **Sample** | **Ra** | **Electrodeposition** | | |
|---|---|---|---|---|---|
| **(mm)** | | **(µm)** | **Voltage (V)** | **Time (s)** | **Remark** |
| 0.6 | 1 | 0.080 | **Used as anode** | | |
| 0.6 | 2 | 0.084 | 20 | 150 | Good |
| 0.6 | 3 | 0.069 | 30 | 120 | Coated two times, to set basic parameters |
| 1.0 | 1 | 0.024 | 20 | 150 | Good |
| 1.0 | 2 | 0.032 | 30 | 150 | Good |
| 1.0 | 3 | 0.027 | 15 | 180 | Visual difference between front and back side |
| 1.2 | 1 | 0.030 | 20 | 150 | Good |
| 1.2 | 2 | 0.024 | 30 | 150 | Good |
| 1.2 | 3 | 0.032 | 15 | 180 | Visual difference between front and back side |

Tables 9 and 10 show improved stability and yields of the emulsion and subsequently deposited coating using HEP as the ring opening agent compared to a standard ring opening agent (N-methylpiperazine (NMP)).

| TABLE 9 | | |
|---|---|---|
| Amine Modifier | NMP | HEP |
| Modification Percentage | 70 | 70 |
| Quaternization Percentage | 50 | 50 |
| Stability @ Room Temperature | 2 days | 4 days |
| Stability @ 5°C | 7 days | 15 days |

| TABLE 10 | | | |
|---|---|---|---|
| Amine modifier | | NMP | HEP |
| Modification Percentage | | 70 | 70 |
| Quaternization Percentage | | 50 | 50 |
| Voltage (V) | Time (sec) | Yield (mg/cm²) | |
| 20 V | 20 | 0.52 | 0.78 |
| | 40 | 0.71 | 1.12 |
| | 60 | 0.9 | 1.42 |
| | 100 | 1.3 | >2.0 |
| 68 V | 20 | 1.4 | 1.5 |
| | 40 | 2.1 | 2.5 |
| | 60 | 2.9 | 3.6 |
| | 100 | 2.5 | 5.7 |
| 80 V | 20 | 0.9 | 1.6 |
| | 40 | 1.5 | 2.4 |
| | 60 | 2.2 | 3.2 |
| | 100 | 3.4 | 4.7 |
| 125 V | 20 | 1.8 | 2.4 |
| | 40 | 3.3 | 3.9 |
| | 60 | 4.6 | 5.3 |
| | 100 | 7.4 | 8.2 |

Table 11 shows the solvent and water content of the polyetherimide coatings. As is evident from the table, the solvent:cosolvent ratio is below 1, with a low water content. Low amounts of water result in improved throwing power, as the conductivity of the polyetherimide coating decreases, while a low solvent:cosolvent ratio indicates a preference of cosolvent deposition, thereby readily enabling the production of improved coatings since the cosolvent more readily volatilizes during cure of the coating, producing a substantially uniform, adherent coating.

| TABLE 11 | | | | |
|---|---|---|---|---|
| Solvent/Cosolvent combination | Solvent (wt%) | | Ratio NMP/cosolvent | Water% |
| | NMP | cosolvent | | |
| | | | | |
| NMP/methyl phenyl ether (anisole) | 1.19 | 9.33 | 0.13 | 1.02 |
| NMP/2-methoxy phenyl acetone | 0.76 | 8.43 | 0.09 | 1.03 |
| NMP/acetophenone | 0.78 | 4.82 | 0.16 | 2 |

Table 12 shows typical mechanical properties of carbon fiber polyetherimide composites (each composite comprises 50 vol% fibers and 50 vol% polyetherimide formed by laminating 26 woven fabric layers) made by the cataphoretic electrodeposition process described in the above example.

| TABLE 12 | | |
|---|---|---|
| Property | Unit | Value |
| Flexure Modulus | GPa (giga-pascals) | 45 |
| Flexure Strength | MPa (mega-pascals) | 850 |
| Compression Modulus | GPa | 54 |
| Compression Strength | MPa | 53 |
| Moisture Absorption (after 24 hours) | percentage | 0.3 - 0.5 |

The fiber polyetherimide composite of the present invention enables simplified, inexpensive environmentally friendly production of simple and complex geometry components even fiber reinforced components, having good mechanical properties.

## Claims

1. A cataphoretic electrodeposition process for forming a thermoplastic coated substrate, comprising:
forming a thermoplastic emulsion, comprising:
dispersing a thermoplastic resin in a solvent and a substantially water insoluble cosolvent, said thermoplastic resin having at least one imide linkage;
reacting a ring opening agent with said imide linkages to form amine groups;
neutralizing said amine groups with a neutralization agent to form a quaternized mixture;
forming the thermoplastic emulsion by adding water to said quaternized mixture;
inserting an anode into said emulsion;
inserting a cathode into said emulsion, wherein said cathode is the substrate;
applying an electrical current to said emulsion;
forming a thermoplastic cation; and
reacting said thermoplastic cation at said cathode to form an insoluble thermoplastic species which coats said substrate.

2. The cataphoretic electrodeposition process of Claim 1, wherein said thermoplastic resin is a polyetherimide resin comprising structural units of the formula (I): 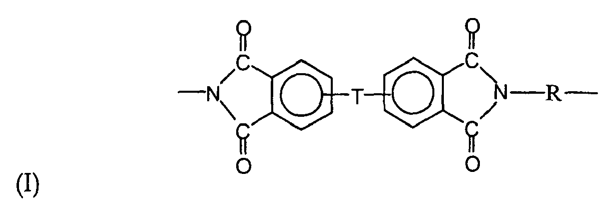 wherein the divalent T moiety bridges the 3,3', 3,4', 4,3', or 4,4' positions of the aryl rings of the respective aryl imide moieties of formula (I); T is -O- or a group of the formula -O-Z-O- ; Z is a divalent radical selected from formulae (II): 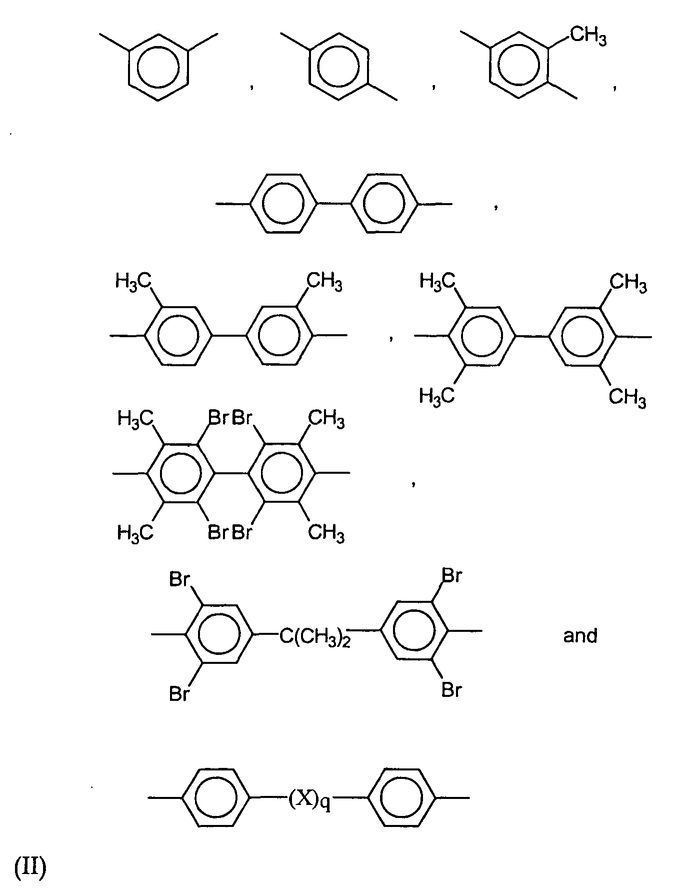 wherein X is a divalent radicals of: 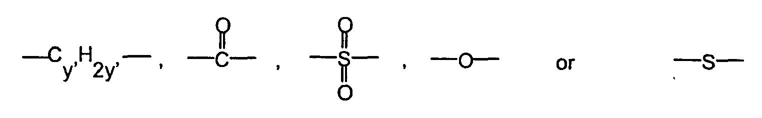 wherein y' is an integer from 1 to about 5, and q is 0 or 1; R is a divalent organic radical selected from: (a) aromatic hydrocarbon radicals having from 6 to about 20 carbon atoms and halogenated derivatives thereof, (b) alkylene radicals having from 2 to about 20 carbon atoms, (c) cycloalkylene radicals having from 3 to about 20 carbon atoms, and (d) divalent radicals of the general formula (IV): 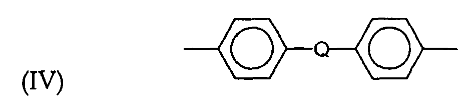 where Q is: 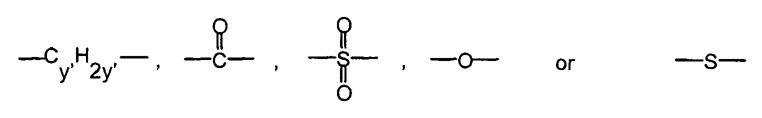 where y' is an integer from about 1 to about 5.

3. The cataphoretic electrodeposition process of Claim 1, wherein said thermoplastic resin is, and wherein said polyetherimide resin comprises the reaction product formed by melt polymerization of 2,2-bis[4-(3,4-dicarboxyphenoxy)phenyl]propane dianhydride with metaphenylene diamine.

4. The cataphoretic electrodeposition process of Claim 1, wherein said solvent and said cosolvent each have a solubility in water of less than about 5.5 g/l.

5. The cataphoretic electrodeposition process of Claim 1, wherein said solvent is N-methyl pyrolidinone.

6. The cataphoretic electrodeposition process of Claim 1, wherein said cosolvent is a ketone, phenol or ether solvent.

7. The cataphoretic electrodeposition process of Claim 1, wherein said cosolvent is anisole.

8. The cataphoretic electrodeposition process of Claim 1, wherein said opening agent is amine.

9. The cataphoretic electrodeposition process of Claim 8, wherein said opening agent is a secondary or tertiary amine.

10. The cataphoretic electrodeposition process of Claim 1, wherein said opening agent is N-methylpiperazine or 2-(piperazinyl)ethanol.

11. The cataphoretic electrodeposition process of Claim 1, wherein said neutralization agent has an acid strength, Kₐ, of greater than about 10⁻⁵.

12. The cataphoretic electrodeposition process of Claim 1, wherein said neutralization agent is a mono-acid.

13. The cataphoretic electrodeposition process of Claim 1, wherein said neutralization agent is lactic acid or glycolic acid.

14. The cataphoretic electrodeposition process of Claim 1, wherein said emulsion comprises up to about 10 volume percent (vol%) thermoplastic resin, up to about 5 vol% ring opening agent, up to about 5 vol% neutralization agent, up to about 20 vol% solvent, up to about 20 vol% cosolvent, balance water.

15. The cataphoretic electrodeposition process of Claim 1, wherein said emulsion comprises about 3 vol% to about 8 vol% polyetherimide resin, about 0.2 vol% to about 3 vol% ring opening agent, about 0.3 vol% to about 3.5 vol% neutralization agent, about 8 vol% to about 15 vol% solvent, about 9 vol% to about 15 vol% cosolvent, balance water.

16. The cataphoretic electrodeposition process of Claim 1, wherein said emulsion comprises about 4 vol% to about 7 vol% polyetherimide resin, about 0.5 vol% to about 1.5 vol% ring opening agent, about 0.5 vol% to about 2 vol% neutralization agent, about 10 vol% to about 13 vol% solvent, about 10 vol% to about 12.5 vol% cosolvent, balance water.

17. The cataphoretic electrodeposition process of Claim 1, wherein said thermoplastic resin is polyetherimide and said polyetherimide resin comprises a copolymer made by condensation of 2,2-bis(2,3-dicarboxy phenoxy phenol)propane dianhydride with metaphenylene diamine and an aminopropyl-terminated D₁₀ polydimethylsiloxane.

18. The cataphoretic electrodeposition process of Claim 1, wherein said substrate comprises sheets, disks, cubes, and fibers.

19. The cataphoretic electrodeposition process of Claim 18, wherein said fiber preform comprises woven fabrics, non-woven fabrics, unidirectional tapes, and random fiber sheets.

20. The cataphoretic electrodeposition process of Claim 1, wherein said substrate comprises glass, carbon, aluminum, platinum, or mixtures thereof.

21. The cataphoretic electrodeposition process of Claim 19, wherein said substrate has a metal coating.

22. The cataphoretic electrodeposition process of Claim 21, wherein said metal coating is nickel, iron, steel, platinum, aluminum, titanium, or an alloy thereof.

23. The cataphoretic electrodeposition process of Claim 1, further comprising reacting about 50% to about 80% of said anhydride groups with said ring opening agent.

24. The cataphoretic electrodeposition process of Claim 1, further comprising reacting about 60% to about 75% of said anhydride groups with said ring opening agent.

25. The cataphoretic electrodeposition process of Claim 23, further comprising neutralizing about 42% to about 55% of said amine groups.

26. The cataphoretic electrodeposition process of Claim 1, wherein said thermoplastic resin is poly(amic acid), poly(urethane imide), poly(amide imide), polyetherimide, poly(thioether imide sulfone), or a combination thereof.

27. A method of making a thermoplastic emulsion for use in a cataphoretic electrodeposition process, comprising:
dispersing thermoplastic resin in a solvent and a substantially water insoluble cosolvent, said thermoplastic resin having at least one imide linkage;
reacting a ring opening agent with said imide linkage to form amine groups;
neutralizing said amine groups with a neutralization agent to form a quaternized mixture; and
mixing water into said quaternized mixture to form the emulsion.

28. The method of making a stable thermoplastic emulsion of Claim 27, wherein said thermoplastic resin is polyetherimide and said polyetherimide resin comprises structural units of the formula (I): 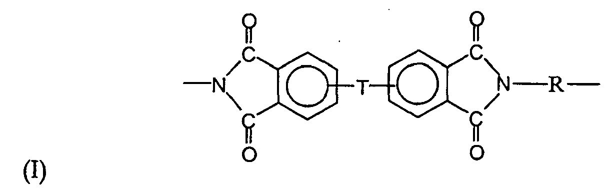 wherein the divalent T moiety bridges the 3,3', 3,4', 4,3', or 4,4' positions of the aryl rings of the respective aryl imide moieties of formula (I); T is -O- or a group of the formula -O-Z-O- ; Z is a divalent radical selected from formulae (II): 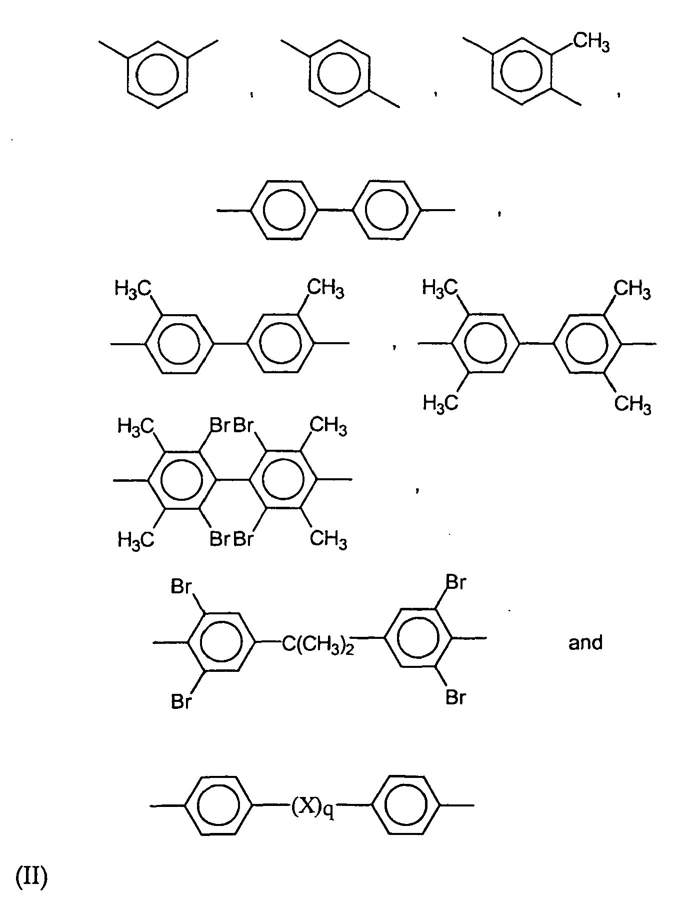 wherein X is: 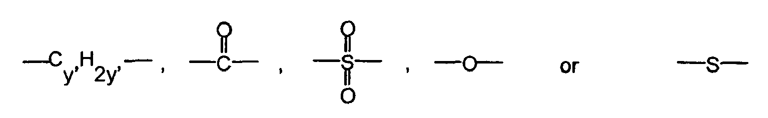 wherein y' is an integer from 1 to about 5, and q is 0 or 1; R is a divalent organic radical selected from: (a) aromatic hydrocarbon radicals having from 6 to about 20 carbon atoms and halogenated derivatives thereof, (b) alkylene radicals having from 2 to about 20 carbon atoms, (c) cycloalkylene radicals having from 3 to about 20 carbon atoms, and (d) divalent radicals of the general formula (IV): 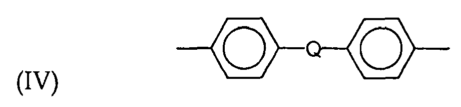 where Q is: 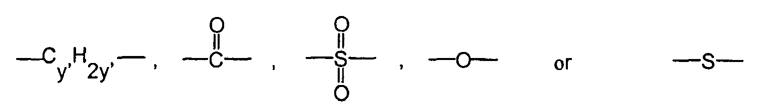 where y' is an integer from about 1 to about 5.

29. The method of making a thermoplastic emulsion of Claim 27, wherein said thermoplastic resin is polyetherimide and said polyetherimide resin comprises the reaction product formed by melt polymerization of 2,2-bis[4-(3,4-dicarboxyphenoxy)phenyl]propane dianhydride with metaphenylene diamine.

30. The method of making a thermoplastic emulsion of Claim 27, wherein said solvent and said cosolvent each have a solubility in water of less than about 5.5 g/l.

31. The method of making a thermoplastic emulsion of Claim 27, wherein said solvent is N-methyl pyrolidinone.

32. The method of making a thermoplastic emulsion of Claim 27, wherein said cosolvent is a ketone, phenol or ether solvent.

33. The method of making a thermoplastic emulsion of Claim 27, wherein said cosolvent is anisole.

34. The method of making a thermoplastic emulsion of Claim 27, wherein said ring opening agent is amine.

35. The method of making a thermoplastic emulsion of Claim 34, wherein said ring opening agent is a secondary or tertiary amine.

36. The method of making a thermoplastic emulsion of Claim 27, wherein said ring opening agent is N-methylpiperazine or 2-(piperazinyl)ethanol.

37. The method of making a thermoplastic emulsion of Claim 27, wherein said neutralization agent has an acid strength, Kₐ, of greater than about 10-5.

38. The method of making a thermoplastic emulsion of Claim 27, wherein said neutralization agent is a mono-acid.

39. The method of making a thermoplastic emulsion of Claim 27, wherein said neutralization agent is lactic acid or glycolic acid.

40. The method of making a thermoplastic emulsion of Claim 27, wherein said emulsion comprises up to about 10 volume percent (vol%) polyetherimide resin, up to about 5 vol% ring opening agent, up to about 5 vol% neutralization agent, up to about 20 vol% solvent, up to about 20 vol% cosolvent, balance water.

41. The method of making a thermoplastic emulsion of Claim 27, wherein said emulsion comprises about 3 vol% to about 8 vol% polyetherimide resin, about 0.2 vol% to about 3 vol% ring opening agent, about 0.3 vol% to about 3.5 vol% neutralization agent, about 8 vol% to about 15 vol% solvent, about 9 vol% to about 15 vol% cosolvent, balance water.

42. The method of making a thermoplastic emulsion of Claim 27, wherein said emulsion comprises about 4 vol% to about 7 vol% polyetherimide resin, about 0.5 vol% to about 1.5 vol% ring opening agent, about 0.5 vol% to about 2 vol% neutralization agent, about 10 vol% to about 13 vol% solvent, about 10 vol% to about 12.5 vol% cosolvent, balance water.

43. The method of making a thermoplastic emulsion of Claim 27, wherein said thermoplastic resin comprises polyetherimide and said polyetherimide resin comprises a copolymer made by condensation of 2,2-bis(2,3-dicarboxy phenoxy phenol)propane dianhydride with metaphenylene diamine and an aminopropyl-terminated D₁₀ polydimethylsiloxane.

44. The method of making a thermoplastic emulsion of Claim 27, further comprising reacting about 50% to about 80% of said imide linkages with said ring opening agent.

45. The method of making a thermoplastic emulsion of Claim 27, further comprising reacting about 60% to about 75% of said imide linkages with said ring opening agent.

46. The method of making a thermoplastic emulsion of Claim 45, further comprising neutralizing about 42% to about 55% of said amine groups.

47. A cataphoretic electrodeposition process for forming a thermoplastic coating, comprising:
forming a thermoplastic emulsion, comprising:
dispersing a thermoplastic resin in a solvent and a substantially water insoluble cosolvent, said thermoplastic resin having at least one imide linkage;
reacting a ring opening agent with said imide linkage to form amine groups;
neutralizing said amine groups with a neutralization agent to form a quaternized mixture;
forming the thermoplastic emulsion by adding water to said quaternized mixture;
inserting at least one anode and at least one cathode electrode into said emulsion;
applying an electrical current to said emulsion;
forming a thermoplastic cation; and
reacting said thermoplastic cation at said cathode to form an insoluble thermoplastic species which coats a substrate.

48. The cataphoretic electrodeposition process of Claim 47, wherein said thermoplastic resin comprises polyetherimide, and said polyetherimide resin comprises structural units of the formula (I): 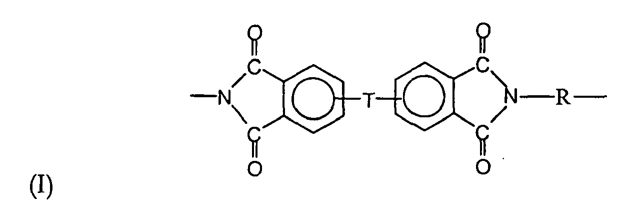 wherein the divalent T moiety bridges the 3,3', 3,4', 4,3', or 4,4' positions of the aryl rings of the respective aryl imide moieties of formula (I); T is -O- or a group of the formula -O-Z-O- ; Z is a divalent radical selected from: 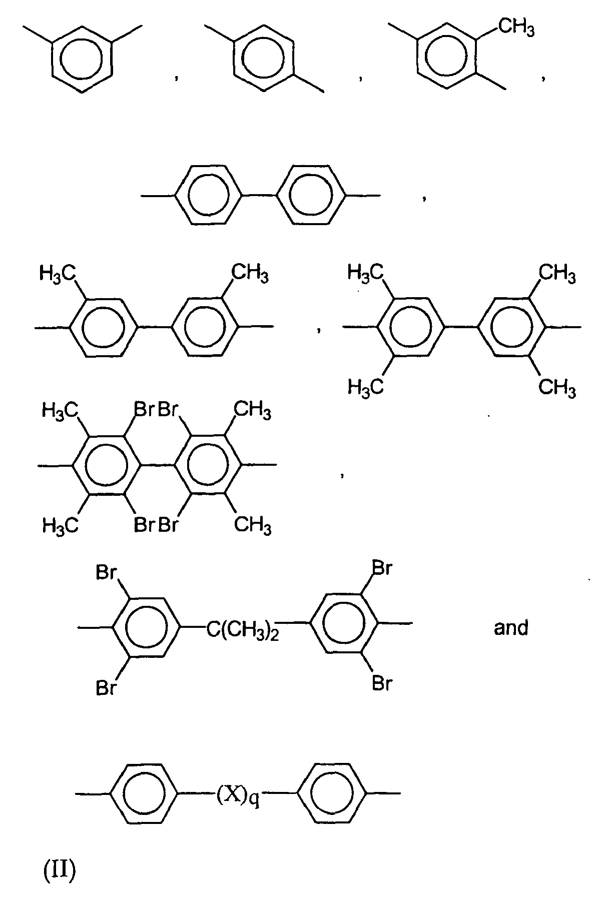 wherein X is: 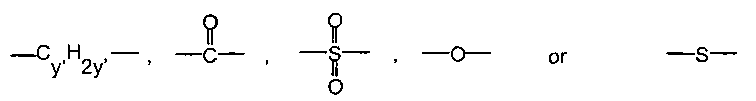 wherein y' is an integer from 1 to about 5, and q is 0 or 1; R is a divalent organic radical selected from: (a) aromatic hydrocarbon radicals having from 6 to about 20 carbon atoms and halogenated derivatives thereof, (b) alkylene radicals having from 2 to about 20 carbon atoms, (c) cycloalkylene radicals having from 3 to about 20 carbon atoms, and (d) divalent radicals of the general formula (IV): 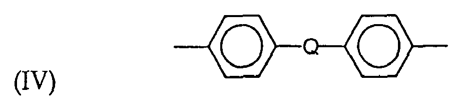 where Q is: 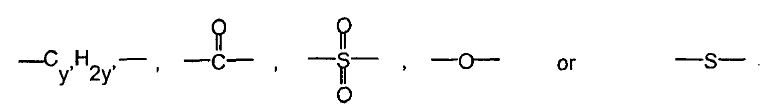 where y' is an integer from about 1 to about 5.

49. The cataphoretic electrodeposition process of Claim 47, wherein said polyetherimide resin comprises the reaction product formed by melt polymerization of 2,2-bis[4-(3,4-dicarboxyphenoxy)phenyl]propane dianhydride with metaphenylene diamine.

50. The cataphoretic electrodeposition process of Claim 47, wherein said solvent and said cosolvent each have a solubility in water of less than about 5.5 g/1.

51. The cataphoretic electrodeposition process of Claim 47, wherein said solvent is N-methyl pyrolidinone.

52. The cataphoretic electrodeposition process of Claim 47, wherein said cosolvent is a ketone, phenol or ether solvent.

53. The cataphoretic electrodeposition process of Claim 47, wherein said cosolvent is anisole.

54. The cataphoretic electrodeposition process of Claim 47, wherein said ring opening agent is amine.

55. The cataphoretic electrodeposition process of Claim 54, wherein said ring opening agent is a secondary or tertiary amine.

56. The cataphoretic electrodeposition process of Claim 47, wherein said ring opening agent is N-methylpiperazine or 2-(piperazinyl)ethanol.

57. The cataphoretic electrodeposition process of Claim 47, wherein said neutralization agent has an acid strength, Kₐ, of greater than about 10⁻⁵.

58. The cataphoretic electrodeposition process of Claim 47, wherein said neutralization agent is a mono-acid.

59. The cataphoretic electrodeposition process of Claim 47, wherein said neutralization agent is lactic acid or glycolic acid.

60. The cataphoretic electrodeposition process of Claim 47, wherein said emulsion comprises up to about 10 volume percent (vol%) polyetherimide resin, up to about 5 vol% ring opening agent, up to about 5 vol% neutralization agent, up to about 20 vol% solvent, up to about 20 vol% cosolvent, balance water.

61. The cataphoretic electrodeposition process of Claim 47, wherein said emulsion comprises about 3 vol% to about 8 vol% polyetherimide resin, about 0.2 vol% to about 3 vol% ring opening agent, about 0.3 vol% to about 3.5 vol% neutralization agent, about 8 vol% to about 15 vol% solvent, about 9 vol% to about 15 vol% cosolvent, balance water.

62. The cataphoretic electrodeposition process of Claim 47, wherein said emulsion comprises about 4 vol% to about 7 vol% polyetherimide resin, about 0.5 vol% to about 1.5 vol% ring opening agent, about 0.5 vol% to about 2 vol% neutralization agent, about 10 vol% to about 13 vol% solvent, about 10 vol% to about 12.5 vol% cosolvent, balance water.

63. The cataphoretic electrodeposition process of Claim 47, wherein the polyetherimide resin comprises a copolymer made by condensation of 2,2-bis(2,3-dicarboxy phenoxy phenol)propane dianhydride with metaphenylene diamine and an aminopropyl-terminated D₁₀ polydimethylsiloxane.

64. The cataphoretic electrodeposition process of Claim 47, further comprising reacting about 50% to about 80% of said imide linkages with said ring opening agent.

65. The cataphoretic electrodeposition process of Claim 47, further comprising reacting about 60% to about 75% of said imide linkages with said ring opening agent.

66. The cataphoretic electrodeposition process of Claim 65, further comprising neutralizing about 42% to about 55% of said amine groups.

67. The cataphoretic electrodeposition process of Claim 47, wherein said thermoplastic resin is poly(amic acid), poly(urethane imide), poly(amide imide), polyetherimide, poly(thioether imide sulfone), and combinations thereof.

68. A polyetherimide emulsion for use in a cataphoretic electrodeposition process, comprising: up to about 10 volume percent (vol%) polyetherimide resin, up to about 5 vol% ring opening agent, up to about 5 vol% neutralization agent to quaternize amine groups found upon ring opening, up to about 20 vol% solvent, up to about 20 vol% substantially water insoluble cosolvent, balance water.

69. The polyetherimide emulsion of Claim 68, wherein said emulsion comprises about 3 vol% to about 8 vol% polyetherimide resin, about 0.2 vol% to about 3 vol% ring opening agent, about 0.3 vol% to about 3.5 vol% neutralization agent, about 8 vol% to about 15 vol% solvent, about 9 vol% to about 15 vol% cosolvent, balance water.

70. The polyetherimide emulsion of Claim 69, wherein said emulsion comprises about 4 vol% to about 7 vol% of said polyetherimide resin, about 0.5 vol% to about 1.5 vol% of said ring opening agent, about 0.5 vol% to about 2 vol% of said neutralization agent, about 10 vol% to about 13 vol% of said solvent, about 10 vol% to about 12.5 vol% of said cosolvent, said balance water.

71. The polyetherimide emulsion of Claim 68, wherein said polyetherimide resin comprises structural units of the formula (I): 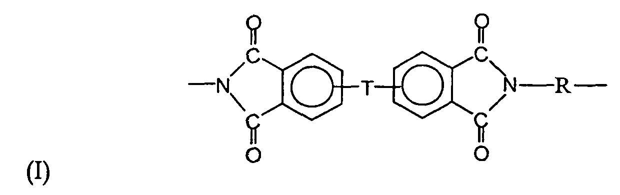 wherein the divalent T moiety bridges the 3,3', 3,4', 4,3', or 4,4' positions of the aryl rings of the respective aryl imide moieties of formula (I); T is -O- or a group of the formula -O-Z-O- ; Z is a divalent radical selected from formulae (II): 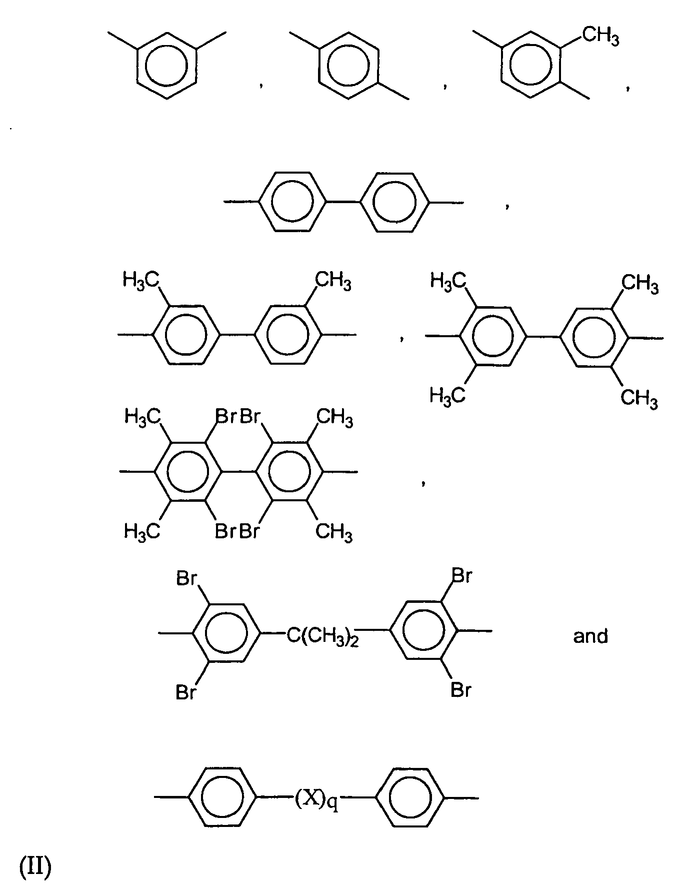 wherein X is: 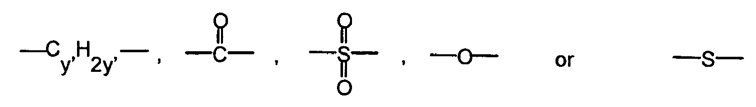 wherein y' is an integer from 1 to about 5, and q is 0 or 1; R is a divalent organic radical selected from: (a) aromatic hydrocarbon radicals having from 6 to about 20 carbon atoms and halogenated derivatives thereof, (b) alkylene radicals having from 2 to about 20 carbon atoms, (c) cycloalkylene radicals having from 3 to about 20 carbon atoms, and (d) divalent radicals of the general formula (IV): 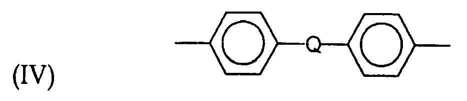 where Q is: 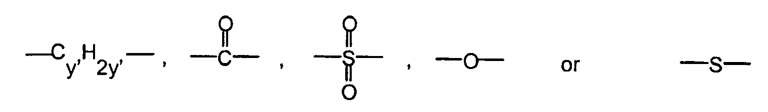 where y' is an integer from about 1 to about 5.

72. The polyetherimide emulsion of Claim 68, wherein said polyetherimide resin comprises the reaction product formed by melt polymerization of 2,2-bis[4-(3,4-dicarboxyphenoxy)phenyl]propane dianhydride with metaphenylene diamine.

73. The polyetherimide emulsion of Claim 68, wherein said solvent and said cosolvent each have a solubility in water of less than about 5.5 g/l.

74. The polyetherimide emulsion of Claim 68, wherein said solvent is N-methyl pyrolidinone.

75. The polyetherimide emulsion of Claim 68, wherein said cosolvent is a ketone, phenol or ether solvent.

76. The polyetherimide emulsion of Claim 68, wherein said cosolvent is anisole.

77. The polyetherimide emulsion of Claim 68, wherein said opening agent is amine.

78. The polyetherimide emulsion of Claim 68, wherein said opening agent is a secondary or tertiary amine.

79. The polyetherimide emulsion of Claim 68, wherein said opening agent is N-methylpiperazine or 2-(piperazinyl)ethanol.

80. The polyetherimide emulsion of Claim 68, wherein said neutralization agent has an acid strength, Kₐ, of greater than about 10⁻⁵.

81. The polyetherimide emulsion of Claim 68, wherein said neutralization agent is a mono-acid.

82. The polyetherimide emulsion of Claim 68, wherein said neutralization agent is lactic acid or glycolic acid.

83. The polyetherimide emulsion of Claim 68, wherein the polyetherimide resin comprises a copolymer made by condensation of 2,2-bis(2,3-dicarboxy phenoxy phenol)propane dianhydride with metaphenylene diamine and an aminopropyl-terminated D₁₀ polydimethylsiloxane.

84. The polyetherimide emulsion of Claim 68, further comprising reacting about 50% to about 80% of said imide linkages with said ring opening agent.

85. The polyetherimide emulsion of Claim 68, further comprising reacting about 60% to about 75% of said imide linkages with said ring opening agent.

86. The polyetherimide emulsion of Claim 85, further comprising neutralizing about 42% to about 55% of said amine groups.

## Patentansprüche

1. Verfahren für eine kataphoretische Elektrotauchlackierung zur Bildung eines beschichteten thermoplastischen Substrats, welches die Bildung einer thermoplastischen Emulsion in den Schritten umfasst:
Dispergieren eines thermoplastischen Harzes in einem Lösungsmittel und einem im Wesentlichen wasserunlöslichen Colösungsmittel wobei das thermoplastische Harz über mindestens eine Imid-Bindung verfügt;
Umsetzen eines Ringöffnungsmittels mit den Imid-Bindungen zur Bildung von Amin-Gruppen;
Neutralisieren der Amin-Gruppen mit einem Neutralisationsmittel zur Bildung einer quaternisierten Mischung;
Bilden der thermoplastischen Emulsion durch Zugabe von Wasser zu der quaternisierten Mischung;
Eintauchen einer Anode in die Emulsion;
Eintauchen einer Kathode in die Emulsion, wobei die Kathode das Substrat ist;
Anlegen eines elektrischen Stromes an die Emulsion;
Bilden eines thermoplastischen Kations und
Umsetzen des thermoplastischen Kations an der Kathode zur Bildung einer unlöslichen thermoplastischen Spezies, welche das Substrat bedeckt.

2. Kataphoretische Elektrotauchlackierung nach Anspruch 1, in welcher das thermoplastische Harz ein Polyetherimid-Harz mit Struktureinheiten der Formel (I) ist: 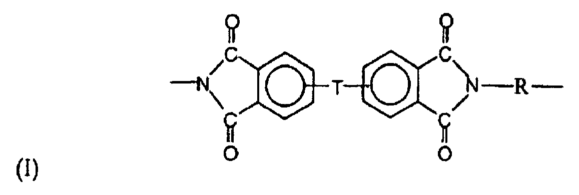 in welcher der zweiwertige T-Rest die 3,3'-, 3,4'-, 4,3'- oder 4,4'-Positionen des Arylrings der jeweiligen Arylimid-Reste der Formel (I) überbrückt; T -O- oder eine Gruppe der Formel -O-Z-O- ist und Z eine zweiwertiger Rest, ausgewählt aus der Formel (II): 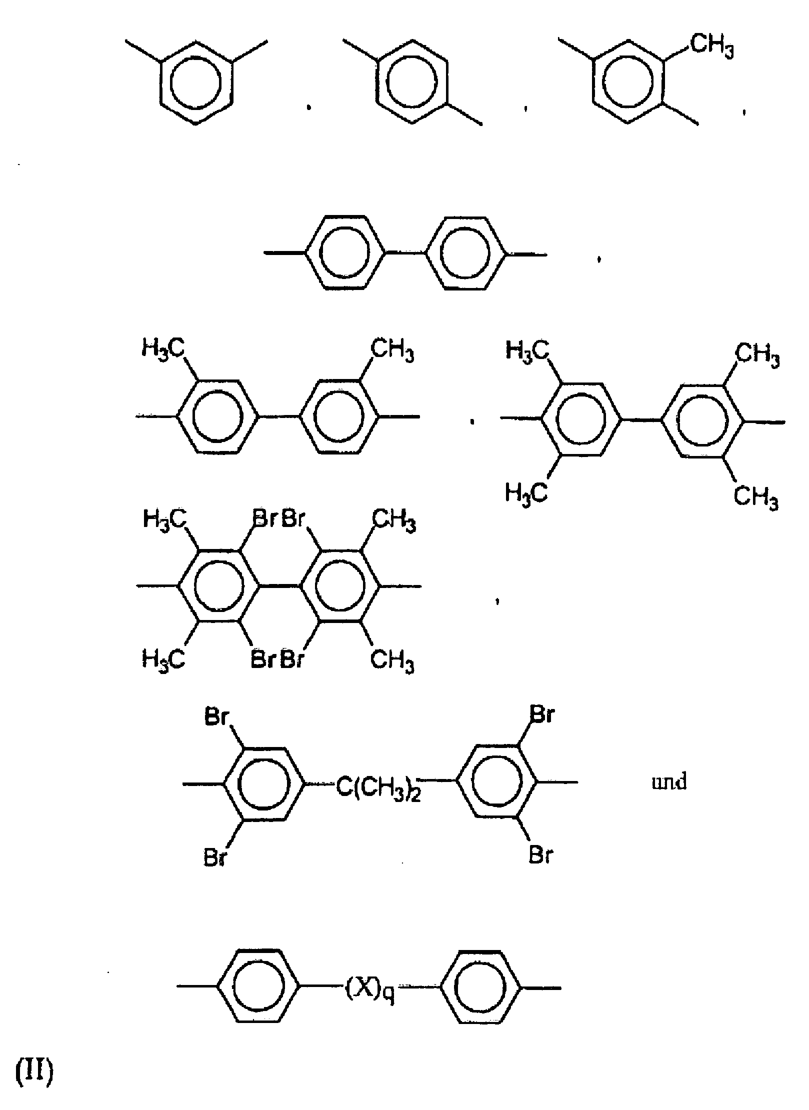 ist, in welcher X ein zweiwertiger Rest aus der Gruppe 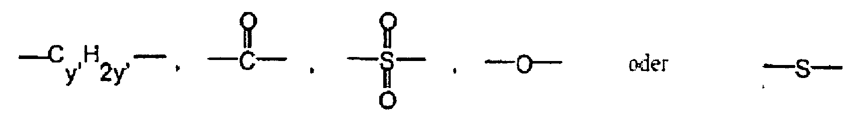 ist, in welcher y' eine ganze Zahl von 1 bis etwa 5 und q 0 oder 1 sind; R ein zweiwertiger organischer Rest, ausgewählt aus (a) aromatischen KohlenwasserstoffResten mit 6 bis etwa 20 Kohlenstoffatomen und deren halogenierte Derivate, (b) Alkylen-Resten mit 2 bis etwa 20 Kohlenstoffatomen, (c) Cycloalkylen-Resten mit 3 bis etwa 20 Kohlenstoffatomen und (d) zweiwertigen Resten der Formel (IV) ist: 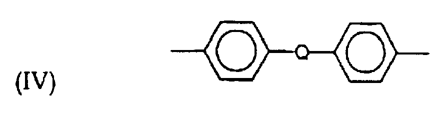 in welcher Q 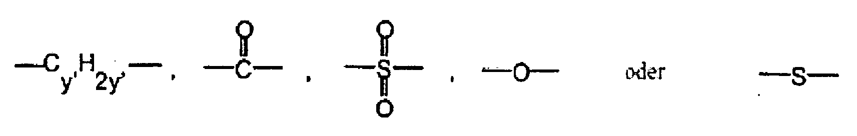 ist, wobei y' eine ganze Zahl von etwa 1 bis etwa 5 ist.

3. Kataphoretische Elektrotauchlackierung nach Anspruch 1, in welcher das thermoplastische Harz Polyetherimid ist und das Polyetherimid-Harz das mittels Schmelzpolymerisation von 2,2-Bis[4-(3,4-dicarboxyphenoxy)phenyl]propandianhydrid mit Metaphenylendiamin gebildete Reaktionsprodukt umfasst.

4. Kataphoretische Elektrotauchlackierung nach Anspruch 1, in welcher das Lösungsmittel und das Colösungsmittel jeweils eine Löslichkeit in Wasser von weniger als etwa 5,5 g/l haben.

5. Kataphoretische Elektrotauchlackierung nach Anspruch 1, in welcher das Lösungsmittel N-Methylpyrrolidon ist.

6. Kataphoretische Elektrotauchlackierung nach Anspruch 1, in welcher das Colösungsmittel ein Keton-, Phenol- oder Ether-Lösungsmittel ist.

7. Kataphoretische Elektrotauchlackierung nach Anspruch 1, in welcher das Colösungsmittel Anisol ist.

8. Kataphoretische Elektrotauchlackierung nach Anspruch 1, in welcher das Öffnungsmittel ein Amin ist.

9. Kataphoretische Elektrotauchlackierung nach Anspruch 8, in welcher das Öffnungsmittel ein sekundäres oder tertiäres Amin ist.

10. Kataphoretische Elektrotauchlackierung nach Anspruch 1, in welcher das Öffnungsmittel N-Methylpiperazin oder 2-(Piperazinyl)ethanol ist.

11. Kataphoretische Elektrotauchlackierung nach Anspruch 1, in welcher das Neutralisationsmittel eine Säurestärke Kₐ von über etwa 10-⁵ aufweist.

12. Kataphoretische Elektrotauchlackierung nach Anspruch 1, in welcher das Neutralisationsmittel eine Monosäure ist.

13. Kataphoretische Elektrotauchlackierung nach Anspruch 1, in welcher das Neutralisationsmittel Milchsäure oder Glykolsäure ist.

14. Kataphoretische Elektrotauchlackierung nach Anspruch 1, in welcher die Emulsion bis zu 10 Volumenprozent (Vol-%) thermoplastisches Harz, bis zu etwa 5 Vol-% Ringöffnungsmittel, bis zu etwa 5 Vol-% Neutralisationsmittel, bis zu etwa 20 Vol-% Lösungsmittel, bis zu 20 Vol-% Colösungsmittel, Rest Wasser, umfasst.

15. Kataphoretische Elektrotauchlackierung nach Anspruch 1, in welcher die Emulsion etwa 3 Vol-% bis etwa 8 Vol-% Polyetherimid-Harz, etwa 0,2 Vol-% bis etwa 3 Vol-% Ringöffnungsmittel, etwa 0,3 Vol-% bis etwa 3,5 Vol-% Neutralisationsmittel, etwa 8 Vol-% bis etwa 15 Vol-% Lösungsmittel, etwa 9 Vol-% bis etwa 15 Vol-% Colösungsmittel, Rest Wasser, umfasst.

16. Kataphoretische Elektrotauchlackierung nach Anspruch 1, in welcher die Emulsion etwa 4 Vol.-% bis etwa 7 Vol.-% Polyetherimid-Harz, etwa 0,5 Vol-% bis etwa 1,5 Vol-% Ringöffnungsmittel, etwa 0,5 Vol-% bis etwa 2 Vol-% Neutralisationsmittel, etwa 10 Vol-% bis etwa 13 Vol-% Lösungsmittel, etwa 10 Vol-% bis etwa 12,5 Vol-% Colösungsmittel, Rest Wasser, umfasst.

17. Kataphoretische Elektrotauchlackierung nach Anspruch 1, in welcher das thermoplastische Harz Polyetherimid ist und das Polyetherimid-Harz ein mittels Kondensation von 2,2-Bis(2,3-dicarboxyphenoxyphenol)propandianhydrid mit Metaphenylendiamin und einem Aminopropyl-terminierten D₁₀-Polydimethylsiloxan hergestelltes Copolymer umfasst.

18. Kataphoretische Elektrotauchlackierung nach Anspruch 1, in welcher das Substrat Platten, Scheiben, Kuben und Fasern umfasst.

19. Kataphoretische Elektrotauchlackierung nach Anspruch 18, in welcher die Faser-Preform Webstoffe, Vliesstoffe, unidirektionale Bänder und Platten aus Random-Fasern umfasst.

20. Kataphoretische Elektrotauchlackierung nach Anspruch 1, in welcher das Substrat Glas, Kohlenstoff, Aluminium, Platin oder Mischungen derselben umfasst.

21. Kataphoretische Elektrotauchlackierung nach Anspruch 19, in welcher das Substrat einen Metallüberzug aufweist.

22. Kataphoretische Elektrotauchlackierung nach Anspruch 21, in welcher der Metallüberzug aus Nickel, Eisen, Stahl, Platin, Aluminium, Titan oder einer Legierung derselben ist.

23. Kataphoretische Elektrotauchlackierung nach Anspruch 1, welche ferner die Umsetzung von etwa 50 % bis etwa 80 % der Anhydridgruppen mit dem Ringöffnungsmittel umfasst.

24. Kataphoretische Elektrotauchlackierung nach Anspruch 1, welche ferner die Umsetzung von etwa 60 % bis etwa 75 % der Anhydridgruppen mit dem Ringöffnungsmittel umfasst.

25. Kataphoretische Elektrotauchlackierung nach Anspruch 23, welche ferner die Neutralisation von etwa 42 % bis etwa 55 % der Aminogruppen umfasst.

26. Kataphoretische Elektrotauchlackierung nach Anspruch 1, in welcher das thermoplastische Harz Poly(säureamid), Poly(urethanamid), Poly(amidimid), Polyetherimid, Poly(thioetherimidsulfon) oder eine Kombination derselben ist.

27. Verfahren zur Herstellung einer thermoplastischen Emulsion für die Verwendung in einer kataphoretischen Elektrotauchlackierung in den Schritten:
Dispergieren des thermoplastischen Harzes in einem Lösungsmittel und einem im Wesentlichen wasserunlöslichen Colösungsmittel,
Umsetzen eines Ringöffnungsmittels mit der Imid-Bindung zur Bildung von Amin-Gruppen;
Neutralisieren der Amin-Gruppen mit einem Neutralisationsmittel zur Bildung einer quaternisierten Mischung und
Zumischen von Wasser zu der quaternisierten Mischung zur Bildung der Emulsion.

28. Verfahren zur Herstellung einer stabilen thermoplastischen Emulsion nach Anspruch 27, in welchem das thermoplastische Harz ein Polyetherimid ist und das Polyetherimid-Harz Struktureinheiten der Formel (I) umfasst: 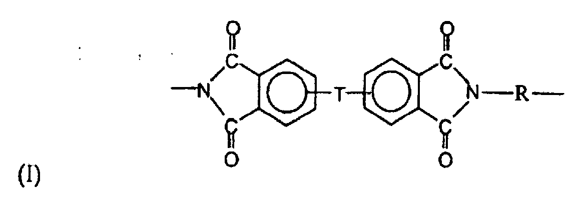 in welcher der zweiwertige T-Rest die 3,3'-, 3,4'-, 4,3'- oder 4,4'-Positionen des Arylrings der jeweiligen Arylimid-Reste der Formel (I) überbrückt; T -O- oder eine Gruppe der Formel -O-Z-O- ist und Z eine zweiwertiger Rest, ausgewählt aus der Formel (II): 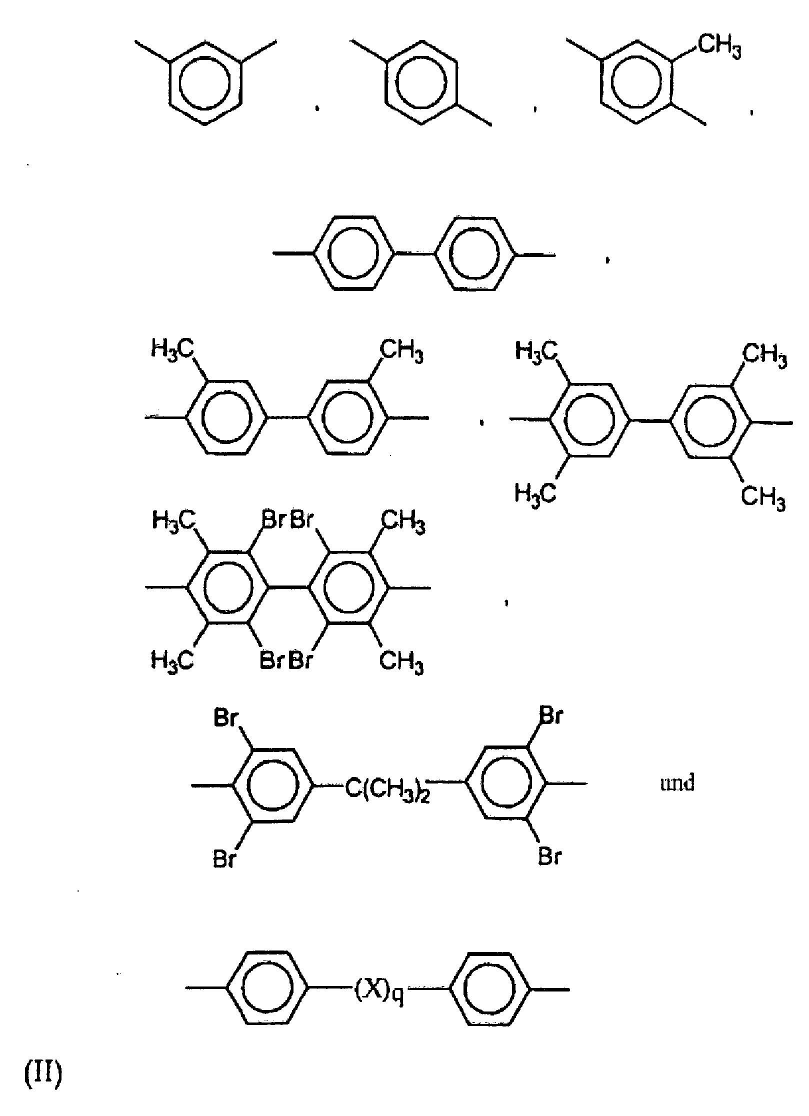 ist, in welcher X ein zweiwertiger Rest aus der Gruppe 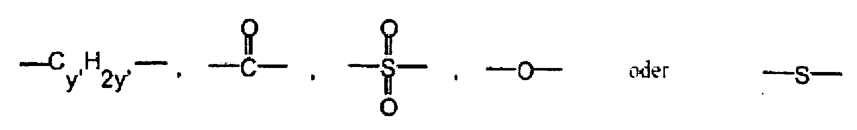 ist, in welcher y' eine ganze Zahl von 1 bis etwa 5 und q 0 oder 1 sind; R ein zweiwertiger organischer Rest, ausgewählt aus (a) aromatischen KohlenwasserstoffResten mit 6 bis etwa 20 Kohlenstoffatomen und deren halogenierte Derivate, (b) Alkylen-Resten mit 2 bis etwa 20 Kohlenstoffatomen, (c) Cycloalkylen-Resten mit 3 bis etwa 20 Kohlenstoffatomen und (d) zweiwertigen Resten der Formel (IV) ist: 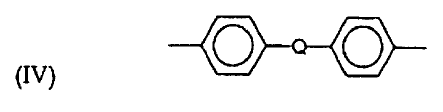 in welcher Q 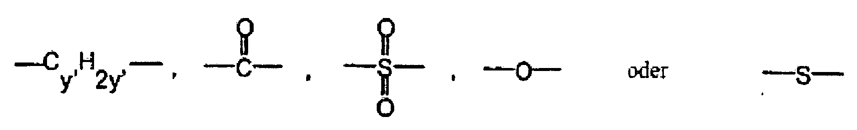 ist, wobei y' eine ganze Zahl von etwa 1 bis etwa 5 ist.

29. Verfahren zur Herstellung einer thermoplastischen Emulsion nach Anspruch 27, in welchem das thermoplastische Harz Polyetherimid ist und das Polyetherimid-Harz das mittels Schmelzpolymerisation von 2,2-Bis[4-(3,4-dicarboxyphenoxy)phenyl]propandianhydrid mit Metaphenylendiamin gebildete Reaktionsprodukt umfasst.

30. Verfahren zur Herstellung einer thermoplastischen Emulsion nach Anspruch 27, in welchem das Lösungsmittel und das Colösungsmittel jeweils eine Löslichkeit in Wasser von weniger als etwa 5,5 g/l haben.

31. Verfahren zur Herstellung einer thermoplastischen Emulsion nach Anspruch 27, in welchem das Lösungsmittel N-Methylpyrrolidon ist.

32. Verfahren zur Herstellung einer thermoplastischen Emulsion nach Anspruch 27, in welchem das Colösungsmittel ein Keton-, Phenol- oder Ether-Lösungsmittel ist.

33. Verfahren zur Herstellung einer thermoplastischen Emulsion nach Anspruch 27, in welchem das Colösungsmittel Anisol ist.

34. Verfahren zur Herstellung einer thermoplastischen Emulsion nach Anspruch 27, in welchem in welcher das Ringöffnungsmittel ein Amin ist.

35. Verfahren zur Herstellung einer thermoplastischen Emulsion nach Anspruch 34, in welchem das Ringöffnungsmittel ein sekundäres oder tertiäres Amin ist.

36. Verfahren zur Herstellung einer thermoplastischen Emulsion nach Anspruch 27, in welchem das Öffnungsmittel N-Methylpiperazin oder 2-(Piperazinyl)ethanol ist.

37. Verfahren zur Herstellung einer thermoplastischen Emulsion nach Anspruch 27, in welchem das Neutralisationsmittel eine Säurestärke Kₐ von über etwa 10⁻⁵ aufweist.

38. Verfahren zur Herstellung einer thermoplastischen Emulsion nach Anspruch 27, in welchem das Neutralisationsmittel eine Monosäure ist.

39. Verfahren zur Herstellung einer thermoplastischen Emulsion nach Anspruch 27, in welchem das Neutralisationsmittel Milchsäure oder Glykolsäure ist.

40. Verfahren zur Herstellung einer thermoplastischen Emulsion nach Anspruch 27, in welchem die Emulsion bis zu 10 Volumenprozent (Vol-%) Polyethermid-Harz, bis zu etwa 5 Vol-% Ringöffnungsmittel, bis zu etwa 5 Vol-% Neutralisationsmittel, bis zu etwa 20 Vol-% Lösungsmittel, bis zu 20 Vol-% Colösungsmittel, Rest Wasser, umfasst.

41. Verfahren zur Herstellung einer thermoplastischen Emulsion nach Anspruch 27, in welchem die Emulsion etwa 3 Vol-% bis etwa 8 Vol-% Polyetherimid-Harz, etwa 0,2 Vol-% bis etwa 3 Vol-% Ringöffnungsmittel, etwa 0,3 Vol-% bis etwa 3,5 Vol-% Neutralisationsmittel, etwa 8 Vol-% bis etwa 15 Vol-% Lösungsmittel, etwa 9 Vol-% bis etwa 15 Vol-% Colösungsmittel, Rest Wasser, umfasst.

42. Verfahren zur Herstellung einer thermoplastischen Emulsion nach Anspruch 27, in welchem die Emulsion etwa 4 Vol.-% bis etwa 7 Vol.-% Polyetherimid-Harz, etwa 0,5 Vol-% bis etwa 1,5 Vol-% Ringöffnungsmittel, etwa 0,5 Vol-% bis etwa 2 Vol-% Neutralisationsmittel, etwa 10 Vol-% bis etwa 13 Vol-% Lösungsmittel, etwa 10 Vol-% bis etwa 12,5 Vol-% Colösungsmittel, Rest Wasser, umfasst.

43. Verfahren zur Herstellung einer thermoplastischen Emulsion nach Anspruch 27, in welchem das thermoplastische Harz Polyetherimid umfasst und das Polyetherimid-Harz ein mittels Kondensation von 2,2-Bis(2,3-dicarboxyphenoxyphenol)propandianhydrid mit Metaphenylendiamin und einem Aminopropyl-terminierten D₁₀-Polydimethylsiloxan hergestelltes Copolymer umfasst.

44. Verfahren zur Herstellung einer thermoplastischen Emulsion nach Anspruch 27, welches ferner die Umsetzung von etwa 50 % bis etwa 80% der Imid-Bindungen mit dem Ringöffnungsmittel umfasst.

45. Verfahren zur Herstellung einer thermoplastischen Emulsion nach Anspruch 27, welches ferner die Umsetzung von etwa 60 % bis etwa 75 % der Imid-Bindungen mit dem Ringöffnungsmittel umfasst.

46. Verfahren zur Herstellung einer thermoplastischen Emulsion nach Anspruch 45, welches ferner die Neutralisation von etwa 42 % bis etwa 55 % der Aminogruppen umfasst.

47. Verfahren für eine kataphoretische Elektrotauchlackierung zur Bildung eines thermoplastischen Überzugs, welches die Bildung einer thermoplastischen Emulsion in den Schritten umfasst:
Dispergieren eines thermoplastischen Harzes in einem Lösungsmittel und einem im Wesentlichen wasserunlöslichen Colösungsmittelm wobei das thermoplastische Harz über mindestens eine Imid-Bindung verfügt;
Umsetzen eines Ringöffnungsmittels mit der Imid-Bindung zur Bildung von Amin-Gruppen;
Neutralisieren der Amin-Gruppen mit einem Neutralisationsmittel zur Bildung einer quaternisierten Mischung;
Bilden der thermoplastischen Emulsion durch Zugabe von Wasser zu der quaternisierten Mischung;
Eintauchen von zumindest einer Anode und mindestens einer kathodischen Elektrode in die Emulsion;
Anlegen eines elektrischen Stromes an die Emulsion;
Bilden eines thermoplastischen Kations und
Reagieren lassen des thermoplastischen Kations an der Kathode zur Bildung einer unlöslichen thermoplastischen Spezies, welche das Substrat bedeckt.

48. Kataphoretische Elektrotauchlackierung nach Anspruch 47, in welcher das thermoplastische Harz ein Polyetherimid umfasst und das Polyetherimid-Harz Struktureinheiten der Formel (I) umfasst: 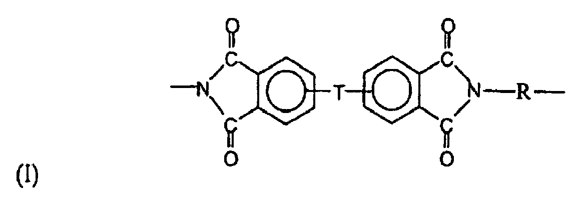 in welcher der zweiwertige T-Rest die 3,3'-, 3,4'-, 4,3'- oder 4,4'-Positionen des Arylrings der jeweiligen Arylimid-Reste der Formel (I) überbrückt; T -O- oder eine Gruppe der Formel
-O-Z-O- ist und Z eine zweiwertiger Rest, ausgewählt aus 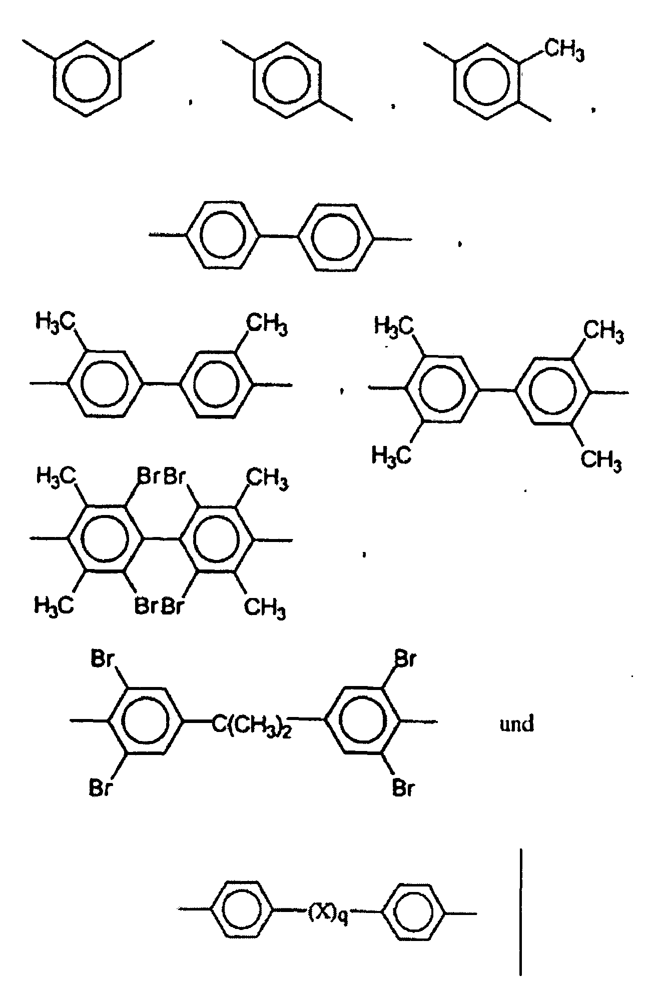 wobei X ein zweiwertiger Rest aus der Gruppe 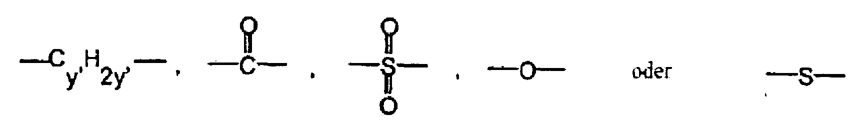 ist, in welcher y' eine ganze Zahl von 1 bis etwa 5 und q 0 oder 1 sind; R ein zweiwertiger organischer Rest, ausgewählt aus (a) aromatischen KohlenwasserstoffResten mit 6 bis etwa 20 Kohlenstoffatomen und deren halogenierte Derivate, (b) Alkylen-Resten mit 2 bis etwa 20 Kohlenstoffatomen, (c) Cycloalkylen-Resten mit 3 bis etwa 20 Kohlenstoffatomen und (d) zweiwertigen Resten der Formel (IV) ist: 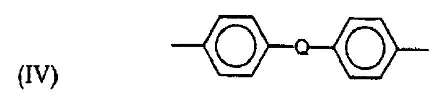 in welcher Q 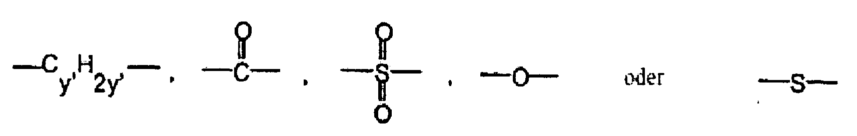 ist, wobei y' eine ganze Zahl von etwa 1 bis etwa 5 ist.

49. Kataphoretische Elektrotauchlackierung nach Anspruch 47, in welcher das Polyetherimid-Harz das mittels Schmelzpolymerisation von 2,2-Bis[4-(3,4-dicarboxyphenoxy)phenyl]propan-dianhydrid mit Metaphenylendiamin gebildete Reaktionsprodukt umfasst.

50. Kataphoretische Elektrotauchlackierung nach Anspruch 47, in welcher das Lösungsmittel und das Colösungsmittel jeweils eine Löslichkeit in Wasser von weniger als etwa 5,5 g/l haben.

51. Kataphoretische Elektrotauchlackierung nach Anspruch 47, in welcher das Lösungsmittel N-Methylpyrrolidon ist.

52. Kataphoretische Elektrotauchlackierung nach Anspruch 47, in welcher das Colösungsmittel ein Keton-, Phenol- oder Ether-Lösungsmittel ist.

53. Kataphoretische Elektrotauchlackierung nach Anspruch 47, in welcher das Colösungsmittel Anisol ist.

54. Kataphoretische Elektrotauchlackierung nach Anspruch 47, in welcher das Ringöffnungsmittel ein Amin ist.

55. Kataphoretische Elektrotauchlackierung nach Anspruch 47, in welcher das Ringöffnungsmittel ein sekundäres oder tertiäres Amin ist.

56. Kataphoretische Elektrotauchlackierung nach Anspruch 47, in welcher das Ringöffnungsmittel N-Methylpiperazin oder 2-(Piperazinyl)ethanol ist.

57. Kataphoretische Elektrotauchlackierung nach Anspruch 47, in welcher das Neutralisationsmittel eine Säurestärke Kₐ von über etwa 10⁻⁵ aufweist.

58. Kataphoretische Elektrotauchlackierung nach Anspruch 47, in welcher das Neutralisationsmittel eine Monosäure ist.

59. Kataphoretische Elektrotauchlackierung nach Anspruch 47, in welcher das Neutralisationsmittel Milchsäure oder Glykolsäure ist.

60. Kataphoretische Elektrotauchlackierung nach Anspruch 47, in welcher die Emulsion bis zu 10 Volumenprozent (Vol-%) Polyethermid-Harz, bis zu etwa 5 Vol-% Ringöffnungsmittel, bis zu etwa 5 Vol-% Neutralisationsmittel, bis zu etwa 20 Vol-% Lösungsmittel, bis zu 20 Vol-% Colösungsmittel, Rest Wasser, umfasst.

61. Kataphoretische Elektrotauchlackierung nach Anspruch 47, in welcher die Emulsion etwa 3 Vol-% bis etwa 8 Vol-% Polyetherimid-Harz, etwa 0,2 Vol-% bis etwa 3 Vol-% Ringöffnungsmittel, etwa 0,3 Vol-% bis etwa 3,5 Vol-% Neutralisationsmittel, etwa 8 Vol-% bis etwa 15 Vol-% Lösungsmittel, etwa 9 Vol-% bis etwa 15 Vol-% Colösungsmittel, Rest Wasser, umfasst.

62. Kataphoretische Elektrotauchlackierung nach Anspruch 47, in welcher die Emulsion etwa 4 Vol.-% bis etwa 7 Vol.-% Polyetherimid-Harz, etwa 0,5 Vol-% bis etwa 1,5 Vol-% Ringöffnungsmittel, etwa 0,5 Vol-% bis etwa 2 Vol-% Neutralisationsmittel, etwa 10 Vol-% bis etwa 13 Vol-% Lösungsmittel, etwa 10 Vol-% bis etwa 12,5 Vol-% Colösungsmittel, Rest Wasser, umfasst.

63. Kataphoretische Elektrotauchlackierung nach Anspruch 47, in welcher das Polyetherimid-Harz ein mittels Kondensation von 2,2-Bis(2,3-dicarboxyphenoxyphenol)-propandianhydrid mit Metaphenylendiamin und einem Aminopropyl-terminierten D₁₀-Polydimethylsiloxan hergestelltes Copolymer umfasst.

64. Kataphoretische Elektrotauchlackierung nach Anspruch 47, welche ferner die Umsetzung von etwa 50 % bis etwa 80 % der Imid-Bindungen mit dem Ringöffnungsmittel umfasst.

65. Kataphoretische Elektrotauchlackierung nach Anspruch 47, welche ferner die Umsetzung von etwa 60 % bis etwa 75 % der Imid-Bindungen mit dem Ringöffnungsmittel umfasst.

66. Kataphoretische Elektrotauchlackierung nach Anspruch 65, welche ferner die Neutralisation von etwa 42 % bis etwa 55 % der Aminogruppen umfasst.

67. Kataphoretische Elektrotauchlackierung nach Anspruch 47, in welcher das thermoplastische Harz Poly((säureamid), Poly(urethanamid), Poly(amidimid), Polyetherimid, Poly(thioetherimidsulfon) oder eine Kombination derselben ist.

68. Polyetherimidemulsion zur Verwendung in einer kataphoretischen Elektrotauchlackierung mit bis zu 10 Volumenprozent (Vol-%) Polyetherimid-Harz, bis zu etwa 5 Vol-% Ringöffnungsmittel, bis zu etwa 5 Vol-% Neutralisationsmittel zur Quarternisierung nach der Ringöffnung gefundenen Ringöffnung, bis zu etwa 20 Vol-% Lösungsmittel, bis zu 20 Vol-% in Wasser im Wsentlichen unlösliches Colösungsmittel, Rest Wasser

69. Polyetherimidemulsion nach Anspruch 68, wobei die Emulsion etwa 3 Vol-% bis etwa 8 Vol-% Polyetherimid-Harz, etwa 0,2 Vol-% bis etwa 3 Vol-% Ringöffnungsmittel, etwa 0,3 Vol-% bis etwa 3,5 Vol-% Neutralisationsmittel, etwa 8 Vol-% bis etwa 15 Vol-% Lösungsmittel, etwa 9 Vol-% bis etwa 15 Vol-% Colösungsmittel, Rest Wasser, umfasst.

70. Polyetherimidemulsion nach Anspruch 69, wobei die Emulsion etwa 4 Vol-% bis etwa 7 Vol-% Polyetherimid-Harz, etwa 0,5 Vol-% bis etwa 1,5 Vol-% Ringöffnungsmittel, etwa 0,5 Vol-% bis etwa 2 Vol-% Neutralisationsmittel, etwa 10 Vol-% bis etwa 13 Vol-% Lösungsmittel, etwa 10 Vol-% bis etwa 12,5 Vol-% Colösungsmittel, Rest Wasser, umfasst.

71. Polyetherimidemulsion nach Anspruch 68, in welcher das Polyetherimid-Harz Struktureinheiten der Formel (I) umfasst: 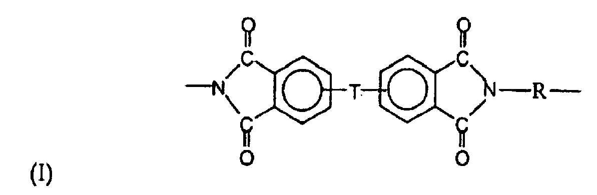 in welcher der zweiwertige T-Rest die 3,3'-, 3,4'-, 4,3'- oder 4,4'-Positionen des Arylrings der jeweiligen Arylimid-Reste der Formel (I) überbrückt; T -O- oder eine Gruppe der Formel
-O-Z-O- ist und Z eine zweiwertiger Rest, ausgewählt aus der Formel (II): 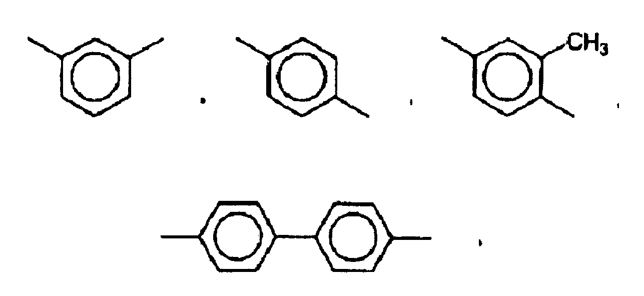 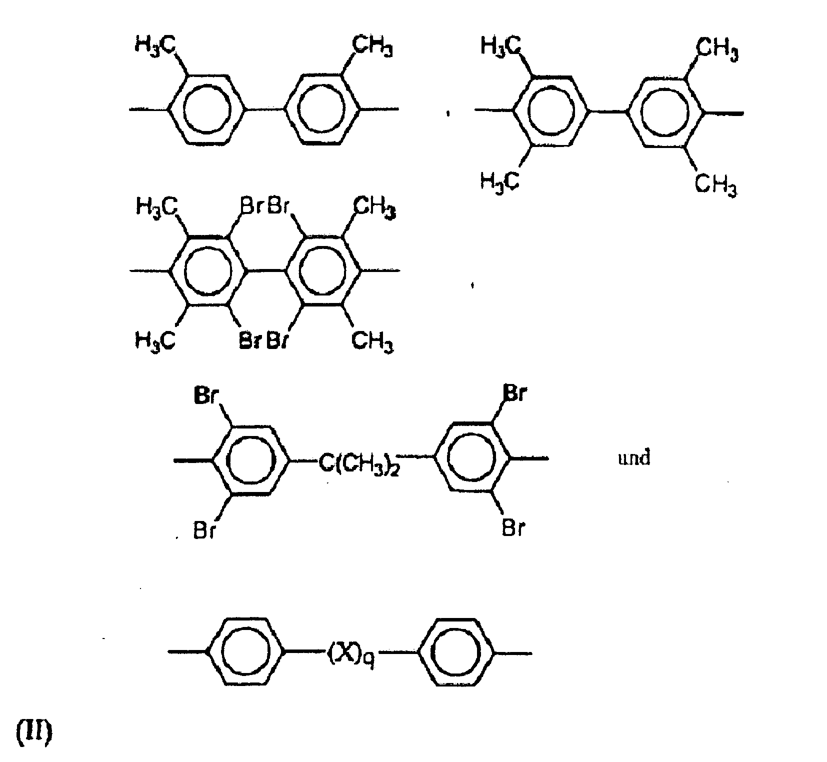 ist, in welcher X ein zweiwertiger Rest aus der Gruppe 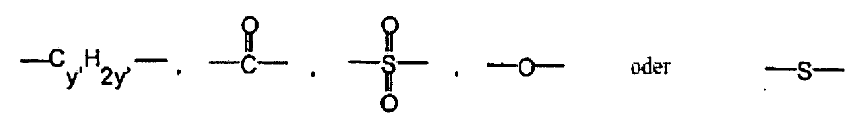 ist, in welcher y' eine ganze Zahl von 1 bis etwa 5 und q 0 oder 1 sind; R ein zweiwertiger organischer Rest, ausgewählt aus (a) aromatischen KohlenwasserstoffResten mit 6 bis etwa 20 Kohlenstoffatomen und deren halogenierte Derivate, (b) Alkylen-Resten mit 2 bis etwa 20 Kohlenstoffatomen, (c) Cycloalkylen-Resten mit 3 bis etwa 20 Kohlenstoffatomen und (d) zweiwertigen Resten der Formel (IV) ist: 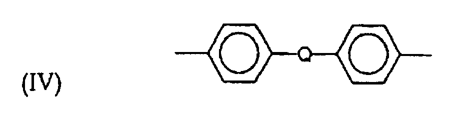 in welcher Q 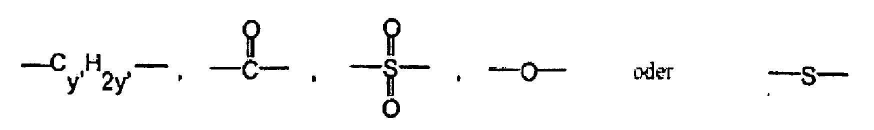 ist, wobei y' eine ganze Zahl von etwa 1 bis etwa 5 ist.

72. Polyetherimidemulsion nach Anspruch 68, in welcher das Polyetherimid-Harz das mittels Schmelzpolymerisation von 2,2-Bis[4-(3,4-dicarboxyphenoxy)phenyl]propandianhydrid mit Metaphenylendiamin gebildete Reaktionsprodukt umfasst.

73. Polyetherimidemulsion nach Anspruch 68, in welcher das Lösungsmittel und das Colösungsmittel jeweils eine Löslichkeit in Wasser von weniger als etwa 5,5 g/l haben.

74. Polyetherimidemulsion nach Anspruch 68, in welcher das Lösungsmittel N-Methylpyrrolidon ist.

75. Polyetherimidemulsion nach Anspruch 68, in welcher das Colösungsmittel ein Keton-, Phenol- oder Ether-Lösungsmittel ist.

76. Polyetherimidemulsion nach Anspruch 68, in welcher r das Colösungsmittel Anisol ist.

77. Polyetherimidemulsion nach Anspruch 68, in welcher das Ringöffnungsmittel ein Amin ist.

78. Polyetherimidemulsion nach Anspruch 68, in welcher in welcher das Ringöffnungsmittel ein sekundäres oder tertiäres Amin ist.

79. Polyetherimidemulsion nach Anspruch 68, in welcher das Ringöffnungsmittel N-Methylpiperazin oder 2-(Piperazinyl)ethanol ist.

80. Polyetherimidemulsion nach Anspruch 68, in welcher das Neutralisationsmittel eine Säurestärke Kₐ von über etwa 10⁻⁵ aufweist.

81. Polyetherimidemulsion nach Anspruch 68, in welcher in welcher das Neutralisationsmittel eine Monosäure ist.

82. Polyetherimidemulsion nach Anspruch 68, in welcher das Neutralisationsmittel Milchsäure oder Glykolsäure ist.

83. Polyetherimidemulsion nach Anspruch 68, in welcher das das Polyetherimid-Harz ein mittels Kondensation von 2,2-Bis(2,3-dicarboxyphenoxyphenol)-propandianhydrid mit Metaphenylendiamin und einem Aminopropyl-terminierten D₁₀-Polydimethylsiloxan hergestelltes Copolymer umfasst.

84. Polyetherimidemulsion nach Anspruch 68, welche ferner die Umsetzung von etwa 50% bis etwa 80% der Imid-Bindungen mit dem Ringöffnungsmittel umfasst.

85. Polyetherimidemulsion nach Anspruch 68, welche ferner die Umsetzung von etwa 60 % bis etwa 75 % der Imid-Bindungen mit dem Ringöffnungsmittel umfasst.

86. Polyetherimidemulsion nach Anspruch 85, welche ferner die Neutralisation von etwa 42 % bis etwa 55 % der Aminogruppen umfasst.

## Revendications

1. Procédé de dépôt électrolytique par cataphorèse afin de former un substrat à revêtement thermoplastique, comprenant:
la formation d'une émulsion thermoplastique, comprenant ;
la dispersion d'une résine thermoplastique dans un solvant et un cosolvant sensiblement insoluble dans l'eau, ladite résine thermoplastique comportant au moins une liaison imide ;
la réaction d'un agent d'ouverture de cycle avec lesdites liaisons imides afin de former des groupes amines ;
la neutralisation desdits groupes amines avec un agent de neutralisation afin de former un mélange quaternaire ;
la formation de l'émulsion thermoplastique par ajout d'eau audit mélange quaternaire ;
l'introduction d'une anode dans ladite émulsion ;
l'introduction d'une cathode dans ladite émulsion, dans lequel ladite cathode est le substrat ;
l'application d'un courant électrique à ladite émulsion ;
la formation d'un cation thermoplastique ; et
la réaction dudit cation thermoplastique au niveau de ladite cathode afin de former une espèce thermoplastique insoluble qui recouvre ledit substrat.

2. Procédé de dépôt électrolytique par cataphorèse selon la revendication 1, dans lequel ladite résine thermoplastique est une résine polyétherimide comprenant des unités structurelles selon la formule (I) : 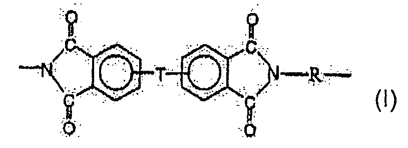 dans laquelle la fraction T divalente établit un lien entre les positions 3,3', 3,4', 4,3', ou 4,4' des cycles aryles des fractions imides aryles respectives de la formule (I) ; T représente -O- ou un groupe selon la formule -O-Z-O- ; Z est un radical divalent sélectionné à partir des formules (II): 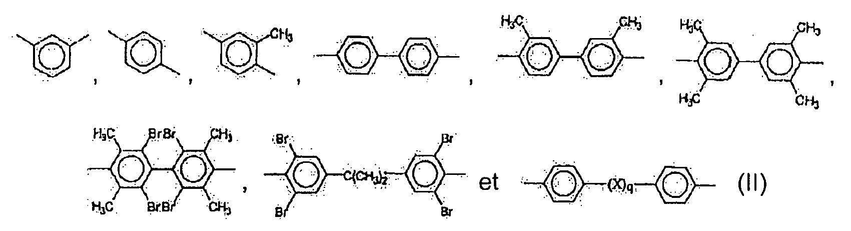 dans lesquelles X représente des radicaux divalents de : 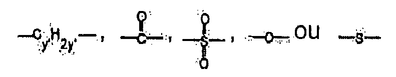 dans lesquels y' est un entier compris entre 1 et 5 environ, et q est égal à 0 ou à 1 ; R est un radical organique divalent sélectionné à partir : (a) de radicaux hydrocarbures aromatiques comportant de 6 à 20 atomes de carbone environ et des dérivés halogénés de ceux-ci, (b) de radicaux alkylènes comportant de 2 à 20 atomes de carbone environ, (c) de radicaux cycloalkylènes comportant de 3 à 20 atomes de carbone environ, et (d) de radicaux divalents selon la formule générale (IV): 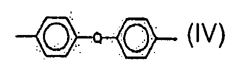 dans laquelle Q représente: 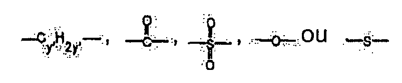 où y' est un entier compris entre 1 environ et 5 environ.

3. Procédé de dépôt électrolytique par cataphorèse selon la revendication 1, dans lequel ladite résine thermoplastique est une résine polyétherimide, et dans lequel ladite résine polyétherimide comprend le produit de réaction formé par polymérisation en fusion de 2,2-bis[4-(3,4-dicarboxyphénoxy)phényl]propane dianhydride avec une diamine de métaphénylène.

4. Procédé de dépôt électrolytique par cataphorèse selon la revendication 1, dans lequel ledit solvant et ledit cosolvant présentent chacun une solubilité dans l'eau inférieure à 5,5 g/l environ.

5. Procédé de dépôt électrolytique par cataphorèse selon la revendication 1, dans lequel ledit solvant est de la N-méthyl pyrolidinone.

6. Procédé de dépôt électrolytique par cataphorèse selon la revendication 1, dans lequel ledit cosolvant est un solvant à base de cétone, de phénol ou d'éther.

7. Procédé de dépôt électrolytique par cataphorèse selon la revendication 1, dans lequel ledit cosolvant est de l'anisole.

8. Procédé de dépôt électrolytique par cataphorèse selon la revendication 1, dans lequel ledit agent d'ouverture est une amine.

9. Procédé de dépôt électrolytique par cataphorèse selon la revendication 8, dans lequel ledit agent d'ouverture est une amine secondaire ou tertiaire.

10. Procédé de dépôt électrolytique par cataphorèse selon la revendication 1, dans lequel ledit agent d'ouverture est de la N-méthylpipérazine ou du 2-(pipérazinyl)éthanol,

11. Procédé de dépôt électrolytique par cataphorèse selon la revendication 1, dans lequel ledit agent de neutralisation présente une acidité, Ka, supérieure à 10-⁵ environ.

12. Procédé de dépôt électrolytique par cataphorèse selon la revendication 1, dans lequel ledit agent de neutralisation est un monoacide.

13. Procédé de dépôt électrolytique par cataphorèse selon la revendication 1, dans lequel ledit agent de neutralisation est de l'acide lactique ou de l'acide glycolique.

14. Procédé de dépôt électrolytique par cataphorèse selon la revendication 1, dans lequel ladite émulsion comprend jusqu'à 10 pour-cent en volume (vol%) environ de résine thermoplastique, jusqu'à 5 vol% environ d'agent d'ouverture de cycle, jusqu'à 5 vol% environ d'agent de neutralisation, jusqu'à 20 vol % environ de solvant, jusqu'à 20 vol % environ de cosolvant, le complément en eau.

15. Procédé de dépôt électrolytique par cataphorèse selon la revendication 1, dans lequel ladite émulsion comprend 3 vol% environ à 8 vol% environ de résine polyétherimide, 0,2 vol% environ à 3 vol% environ d'agent d'ouverture de cycle, 0,3 vol% environ à 3,5 vol% environ d'agent de neutralisation, 8 vol% environ à 15 vol% environ de solvant, 9 vol% environ à 15 vol% environ de cosolvant, le complément en eau.

16. Procédé de dépôt électrolytique par cataphorèse selon la revendication 1, dans lequel ladite émulsion comprend 4 vol% environ à 7 vol% environ de résine polyétherimide, 0,5 vol% environ à 1,5 vol% environ d'agent d'ouverture de cycle, 0,5 vol% environ à 2 vol% environ d'agent de neutralisation, 10 vol% environ à 13 vol% environ de solvant, 10 vol% environ à 12,5 vol% environ de cosolvant, le complément en eau.

17. Procédé de dépôt électrolytique par cataphorèse selon la revendication 1, dans lequel ladite résine thermoplastique est à base de polyétherimide et ladite résine polyétherimide comprend un copolymère obtenu par condensation de 2,2-bis(2,3-dicarboxy phénoxy phénol)propane dianhydride avec de la diamine de métaphénylène et un D10 polydiméthylsiloxane à terminaison aminopropyle.

18. Procédé de dépôt électrolytique par cataphorèse selon la revendication 1, dans lequel ledit substrat comprend des feuilles, des disques, des cubes, et des fibres.

19. Procédé de dépôt électrolytique par cataphorèse selon la revendication 18, dans lequel ladite préforme à base de fibres comprend des tissus tissés, des tissus non tissés, des bandes unidirectionnelles, et des feuilles de fibres aléatoires.

20. Procédé de dépôt électrolytique par cataphorèse selon la revendication 1, dans lequel ledit substrat comprend du verre, du carbone, de l'aluminium, du platine, ou des mélanges de ceux-ci.

21. Procédé de dépôt électrolytique par cataphorèse selon la revendication 19, dans lequel ledit substrat comporte un revêtement métallique.

22. Procédé de dépôt électrolytique par cataphorèse selon la revendication 21, dans lequel ledit revêtement métallique est à base de nickel, de fer, d'acier, de platine, d'aluminium, de titane, ou d'un alliage de ceux-ci.

23. Procédé de dépôt électrolytique par cataphorèse selon la revendication 1, comprenant, en outre, la réaction de 50% environ à 80% environ desdits groupes anhydride avec ledit agent d'ouverture de cycle.

24. Procédé de dépôt électrolytique par cataphorèse selon la revendication 1, comprenant, en outre, la réaction de 60% environ à 75% environ desdits groupes anhydrides avec ledit agent d'ouverture de cycle.

25. Procédé de dépôt électrolytique par cataphorèse selon la revendication 23, comprenant, en outre, la neutralisation de 42% environ à 55% environ desdits groupes amines.

26. Procédé de dépôt électrolytique par cataphorèse selon la revendication 1, dans lequel ladite résine thermoplastique est à base poly(acide amique), de poly(uréthane imide), de poly(amide imide), de polyétherimide, de poly(thioéther imide sulfone), ou d'un mélange de ceux-ci.

27. Procédé de fabrication d'une émulsion thermoplastique destinée à être utilisée dans un procédé de dépôt électrolytique par cataphorèse, comprenant :
la dispersion de résine thermoplastique dans un solvant et un cosolvant sensiblement insoluble dans l'eau, ladite résine thermoplastique comportant au moins une liaison imide ;
la réaction d'un agent d'ouverture de cycle avec ladite liaison imide afin de former des groupes amines ;
la neutralisation desdits groupes amines avec un agent de neutralisation afin de former un mélange quaternaire ; et
le malaxage de l'eau dans ledit mélange quaternaire afin de former l'émulsion.

28. Procédé de fabrication d'une émulsion thermoplastique stable selon la revendication 27, dans lequel ladite résine thermoplastique est à base de polyétherimide et ladite résine polyétherimide comprend des unités structurelles selon la formule (1): 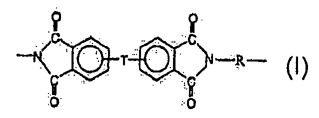 dans laquelle la fraction T divalente établit un lien entre les positions 3,3', 3,4', 4,3', ou 4,4' des cycles aryles des fractions imides aryles respectives de la formule (I) ; T représente -O- ou un groupe selon la formule -O-Z-O- ; Z est un radical divalent sélectionné à partir des formules (II): 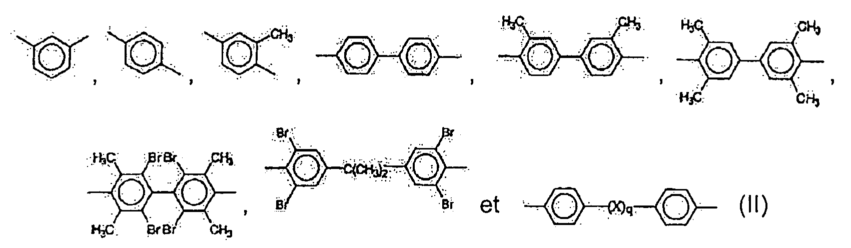 dans lesquelles X représente: 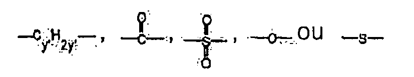 dans lesquels y' est un entier compris entre 1 et 5 environ, et q est égal à 0 ou à 1 ; R est un radical organique divalent sélectionné à partir : (a) de radicaux hydrocarbures aromatiques comportant de 6 à 20 atomes de carbone environ et de dérivés halogénés de ceux-ci, (b) de radicaux alkylènes comportant de 2 à 20 atomes de carbone environ, (c) de radicaux cycloalkylènes comportant de 3 à 20 atomes de carbone environ, et (d) de radicaux divalents selon la formule générale (IV): 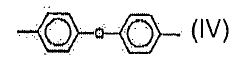 dans laquelle Q représente: 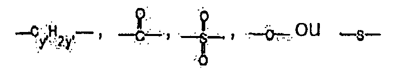 où y' est un entier compris entre 1 environ et 5 environ.

29. Procédé de fabrication d'une émulsion thermoplastique selon la revendication 27, dans lequel ladite résine thermoplastique est une résine polyétherimide et ladite résine polyétherimide comprend le produit de réaction formé par polymérisation en fusion de 2,2-bis[4-(3,4-dicarboxyphénoxy)phényl]propane dianhydride avec de la diamine de métaphénylène.

30. Procédé de fabrication d'une émulsion thermoplastique selon la revendication 27, dans lequel ledit solvant et ledit cosolvant présentent chacun une solubilité dans l'eau inférieure à 5,5 g/l environ.

31. Procédé de fabrication d'une émulsion thermoplastique selon la revendication 27, dans lequel ledit solvant est de la N-méthyl pyrolidinone.

32. Procédé de fabrication d'une émulsion thermoplastique selon la revendication 27, dans lequel ledit cosolvant est un solvant à base de cétone, de phénol ou d'éther.

33. Procédé de fabrication d'une émulsion thermoplastique selon la revendication 27, dans lequel ledit cosolvant à base d'anisole.

34. Procédé de fabrication d'une émulsion thermoplastique selon la revendication 27, dans lequel ledit agent d'ouverture de cycle est une amine.

35. Procédé de fabrication d'une émulsion thermoplastique selon la revendication 34, dans lequel ledit agent d'ouverture de cycle est une amine secondaire ou tertiaire.

36. Procédé de fabrication d'une émulsion thermoplastique selon la revendication 27, dans lequel ledit agent d'ouverture de cycle est de la N-méthylpipérazine ou du 2-(pipérazinyl)éthanol.

37. Procédé de fabrication d'une émulsion thermoplastique selon la revendication 27, dans lequel ledit agent de neutralisation présente une acidité, Ka, supérieure à 10⁻⁵ environ.

38. Procédé de fabrication d'une émulsion thermoplastique selon la revendication 27, dans lequel ledit agent de neutralisation est un monoacide.

39. Procédé de fabrication d'une émulsion thermoplastique selon la revendication 27, dans lequel ledit agent de neutralisation est de l'acide lactique ou de l'acide glycolique.

40. Procédé de fabrication d'une émulsion thermoplastique selon la revendication 27, dans lequel ladite émulsion comprend jusqu'à 10 pour-cent en volume (vol%) environ de résine polyétherimide, jusqu'à 5 vol% environ d'agent d'ouverture de cycle, jusqu'à 5 vol% environ agent de neutralisation, jusqu'à 20 vol% environ de solvant, jusqu'à 20 vol% environ de cosolvant, le complément en eau.

41. Procédé de fabrication d'une émulsion thermoplastique selon la revendication 27, dans lequel ladite émulsion comprend 3 vol% environ à 8 vol% environ de résine polyétherimide, 0,2 vol% environ à 3 vol% environ d'agent d'ouverture de cycle, 0,3 vol% environ à 3,5 vol% environ d'agent de neutralisation, 8 vol% environ à 15 vol% environ de solvant, 9 vol% environ à 15 vol% environ de cosolvant, le complément en eau.

42. Procédé de fabrication d'une émulsion thermoplastique selon la revendication 27, dans lequel ladite émulsion comprend 4 vol% environ à 7 vol% environ de résine polyétherimide, 0,5 vol% environ à 1,5 vol% environ d'agent d'ouverture de cycle, 0,5 vol% environ à 2 vol% environ d'agent de neutralisation, 10 vol% environ à 13 vol% environ de solvant, 10 vol% environ à 12,5 vol% environ de cosolvant, le complément en eau.

43. Procédé de fabrication d'une émulsion thermoplastique selon la revendication 27, dans lequel ladite résine thermoplastique comprend du polyétherimide et ladite résine polyétherimide comprend un copolymère obtenu par condensation de 2,2-bis(2,3-dicarboxy phénoxy phénol)propane dianhydride avec de la diamine de métaphénylène et un D₁₀ polydiméthylsiloxane à terminaison aminopropyle.

44. Procédé de fabrication d'une émulsion thermoplastique selon la revendication 27, comprenant, en outre, la réaction de 50% environ à 80% environ desdites liaisons imides avec ledit agent d'ouverture de cycle.

45. Procédé de fabrication d'une émulsion thermoplastique selon la revendication 27, comprenant, en outre, la réaction de 60% environ à 75% environ desdites liaisons imides avec ledit agent d'ouverture de cycle.

46. Procédé de fabrication d'une émulsion thermoplastique selon la revendication 45, comprenant, en outre, la neutralisation de 42% environ à 55% environ desdits groupes amines.

47. Procédé de dépôt électrolytique par cataphorèse afin de former un revêtement thermoplastique, comprenant:
la formation d'une émulsion thermoplastique, comprenant :
la dispersion d'une résine thermoplastique dans un solvant et un cosolvant sensiblement insoluble dans l'eau, ladite résine thermoplastique comportant au moins une liaison imide ;
la réaction un agent d'ouverture de cycle avec ladite liaison imide afin de former des groupes amines ;
la neutralisation desdits groupes amines avec un agent de neutralisation afin de former un mélange quaternaire ;
la formation de l'émulsion thermoplastique par ajout d'eau audit mélange quaternaire ;
l'introduction d'au moins une électrode d'anode et d'au moins une électrode de cathode dans ladite émulsion ;
l'application d'un courant électrique à ladite émulsion ;
la formation d'un cation thermoplastique ; et
la réaction dudit cation thermoplastique au niveau de ladite cathode afin de former une espèce thermoplastique insoluble qui recouvre un substrat.

48. Procédé de dépôt électrolytique par cataphorèse selon la revendication 47, dans lequel ladite résine thermoplastique comprend du polyétherimide, et ladite résine polyétherimide comprend des unités structurelles selon la formule (I): 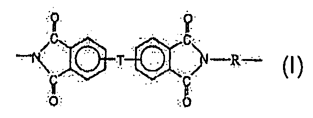 dans laquelle la fraction T divalente établit un lien entre les positions 3,3', 3,4', 4,3', ou 4,4' des cycles aryles des fractions imides aryles respectives de la formule (I) ; T représente -O- ou un groupe selon la formule -O-Z-O- ; Z est un radical divalent sélectionné à partir de : 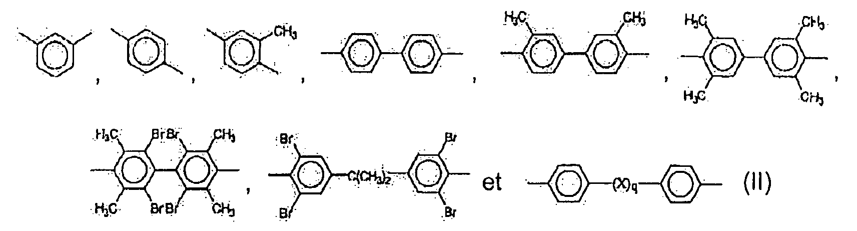 dans lesquels X représente: 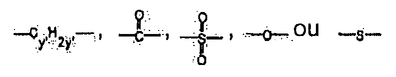 dans lesquels y' est un entier compris entre 1 et 5 environ, et q est égal à 0 ou à 1 ; R est un radical organique divalent sélectionné à partir : (a) de radicaux hydrocarbures aromatiques comportant de 6 à 20 atomes de carbone environ et de dérivés halogénés de ceux-ci, (b) de radicaux alkylènes comportant de 2 à 20 atomes de carbone environ, (c) de radicaux cycloalkylènes comportant de 3 à 20 atomes de carbone environ, et (d) de radicaux divalents selon la formule générale (IV): 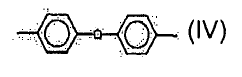 dans laquelle Q représente: 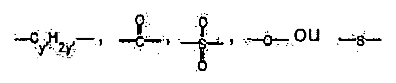 où y' est un entier compris entre 1 environ et 5 environ.

49. Procédé de dépôt électrolytique par cataphorèse selon la revendication 47, dans lequel ladite résine polyétherimide comprend le produit de réaction formé par polymérisation en fusion de 2,2-bis[4-(3,4-dicarboxyphénoxy)phényl]propane dianhydride avec de la diamine de métaphénylène.

50. Procédé de dépôt électrolytique par cataphorèse selon la revendication 47, dans lequel ledit solvant et ledit cosolvant présentent chacun une solubilité dans l'eau inférieure à 5,5 g/l environ.

51. Procédé de dépôt électrolytique par cataphorèse selon la revendication 47, dans lequel ledit solvant est de la N-méthyl pyrolidinone.

52. Procédé de dépôt électrolytique par cataphorèse selon la revendication 47, dans lequel ledit cosolvant est un solvant à base de cétone, de phénol ou d'éther.

53. Procédé de dépôt électrolytique par cataphorèse selon la revendication 47, dans lequel ledit cosolvant est de anisole.

54. Procédé de dépôt électrolytique par cataphorèse selon la revendication 47, dans lequel ledit agent d'ouverture de cycle est une amine.

55. Procédé de dépôt électrolytique par cataphorèse selon la revendication 54, dans lequel ledit agent d'ouverture de cycle est une amine secondaire ou tertiaire.

56. Procédé de dépôt électrolytique par cataphorèse selon la revendication 47, dans lequel ledit agent d'ouverture de cycle est de la N-méthylpipérazine ou du 2-(pipérazinyl)éthanol.

57. Procédé de dépôt électrolytique par cataphorèse selon la revendication 47, dans lequel ledit agent de neutralisation présente une acidité, Ka, supérieure à 10⁻⁵ environ

58. Procédé de dépôt électrolytique par cataphorèse selon la revendication 47, dans lequel ledit agent de neutralisation est un monoacide.

59. Procédé de dépôt électrolytique par cataphorèse selon la revendication 47, dans lequel ledit agent de neutralisation est de l'acide lactique ou de l'acide glycolique.

60. Procédé de dépôt électrolytique par cataphorèse selon la revendication 47, dans lequel ladite émulsion comprend jusqu'à 10 pour-cent en volume (vol%) environ de résine polyétherimide, jusqu'à 5 vol% environ d'agent d'ouverture de cycle, jusqu'à 5 vol% environ d'agent de neutralisation, jusqu'à 20 vol% environ de solvant, jusqu'à 20 vol% environ de cosolvant, le complément en eau.

61. Procédé de dépôt électrolytique par cataphorèse selon la revendication 47, dans lequel ladite émulsion comprend 3 vol% environ à 8 vol% environ de résine polyétherimide, 0,2 vol% environ à 3 vol% environ d'agent d'ouverture de cycle, 0,3 vol% environ à 3,5 vol% environ d'agent de neutralisation, 8 vol% environ à 15 vol% environ de solvant, 9 vol% environ à 15 vol% environ de cosolvant, le complément en eau.

62. Procédé de dépôt électrolytique par cataphorèse selon la revendication 47, dans lequel ladite émulsion comprend 4 vol% environ à 7 vol% environ de résine polyétherimide, 0,5 vol% environ à 1,5 vol% environ d'agent d'ouverture de cycle, 0,5 vol% environ à 2 vol% environ d'agent de neutralisation, 10 vol% environ à 13 vol% environ de solvant, 10 vol% environ à 12,5 vol% environ de cosolvant, le complément en eau.

63. Procédé de dépôt électrolytique par cataphorèse selon la revendication 47, dans lequel la résine polyétherimide comprend un copolymère obtenu par condensation de 2,2-bis(2,3-dicarboxy phénoxy phénol)propane dianhydride avec de la diamine de métaphénylène et un D₁₀ polydiméthylsiloxane à terminaison aminopropyle.

64. Procédé de dépôt électrolytique par cataphorèse selon la revendication 47, comprenant, en outre, la réaction de 50% environ à 80% environ desdites liaisons imides avec ledit agent d'ouverture de cycle.

65. Procédé de dépôt électrolytique par cataphorèse selon la revendication 47, comprenant, en outre, la réaction de 60% environ à75% environ desdites liaisons imides avec ledit agent d'ouverture de cycle.

66. Procédé de dépôt électrolytique par cataphorèse selon la revendication 65, comprenant, en outre, la neutralisation de 42% environ à 55% environ desdits groupes amines.

67. Procédé de dépôt électrolytique par cataphorèse selon la revendication 47, dans lequel ladite résine thermoplastique est à base de poly(acide amique), de poly(uréthane imide), de poly(amide imide), de polyétherimide, de poly(thioéther imide sulfone), et de mélanges de ceux-ci.

68. Emulsion de polyétherimide à utiliser dans un procédé de dépôt électrolytique par cataphorèse, comprenant: jusqu'à 10 pour-cent en volume (vol%) environ de résine polyétherimide, jusqu'à 5 vol% environ d'agent d'ouverture de cycle, jusqu'à 5 vol% environ d'agent de neutralisation afin de rendre quaternaires les groupes amines trouvés lors de l'ouverture de cycle, jusqu'à 20 vol% environ de solvant, jusqu'à 20 vol% environ de cosolvant sensiblement insoluble dans l'eau, le complément en eau.

69. Emulsion de polyétherimide selon la revendication 68, dans laquelle ladite émulsion comprend 3 vol% environ à 8 vol% environ de résine polyétherimide, 0,2 vol% environ à 3 vol% environ d'agent d'ouverture de cycle, 0,3 vol% environ à environ 3,5 vol% agent de neutralisation, 8 vol% environ à 15 vol% environ de solvant, 9 vol% environ à 15 vol% environ de cosolvant, le complément en eau.

70. Emulsion de polyétherimide selon la revendication 69, dans lequel ladite émulsion comprend 4 vol% environ à 7 vol% environ de ladite résine polyétherimide, 0,5 vol% environ à 1,5 vol% environ dudit agent d'ouverture de cycle, 0,5 vol% environ à 2 vol% environ dudit agent de neutralisation, 10 vol% environ à 13 vol% environ dudit solvant, 10 vol% environ à 12,5 vol% environ dudit cosolvant, ledit complément en eau.

71. Emulsion de polyétherimide selon la revendication 68, dans laquelle ladite résine polyétherimide comprend des unités structurelles selon la formule (I): 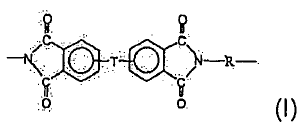 dans laquelle la fraction T divalente établit un lien entre les positions 3,3', 3,4', 4,3', ou 4,4' des cycles aryles des fractions imides aryles respectives de la formule (I) ; T représente -O- ou un groupe selon la formule -O-Z-O- ; Z est un radical divalent sélectionné à partir des formules (II): 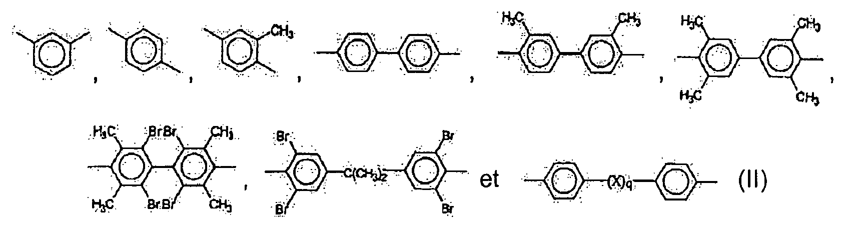 dans lesquelles X représente: 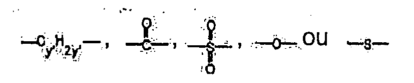 où y' est un entier compris entre 1 et 5 environ, et q est égal à 0 ou à 1 ; R est un radical organique divalent sélectionné à partir : (a) de radicaux hydrocarbures aromatiques comportant de 6 à 20 atomes de carbone environ et de dérivés halogénés de ceux-ci, (b) de radicaux alkylènes comportant de 2 à 20 atomes de carbone environ, (c) de radicaux cycloalkylènes comportant de 3 à 20 atomes de carbone environ, et (d) de radicaux divalents selon la formule générale (IV): 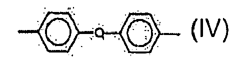 dans laquelle Q représente: 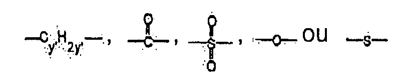 où y' est un entier compris entre 1 environ et 5 environ.

72. Emulsion de polyétherimide selon la revendication 68, dans laquelle ladite résine polyétherimide comprend le produit de réaction formé par polymérisation en fusion de 2,2-bis[4-(3,4-dicarboxyphénoxy)phényl]propane dianhydride avec de la diamine de métaphénylène.

73. Emulsion de polyétherimide selon la revendication 68, dans laquelle ledit solvant et ledit cosolvant présentent chacun une solubilité dans l'eau inférieure à 5,5 g/l environ.

74. Emulsion de polyétherimide selon la revendication 68, dans laquelle ledit solvant est de la N-méthyl pyrolidinone.

75. Emulsion de polyétherimide selon la revendication 68, dans laquelle ledit cosolvant est un solvant à base de cétone, de phénol ou d'éther.

76. Emulsion de polyétherimide selon la revendication 68, dans laquelle ledit cosolvant est de l'anisole.

77. Emulsion de polyétherimide selon la revendication 68, dans laquelle ledit agent d'ouverture est une amine.

78. Emulsion de polyétherimide selon la revendication 68, dans laquelle ledit agent d'ouverture est une amine secondaire ou tertiaire.

79. Emulsion de polyétherimide selon la revendication 68, dans laquelle ledit agent d'ouverture est de la N-méthylpipérazine ou du 2-(pipérazinyl)éthanol.

80. Emulsion de polyétherimide selon la revendication 68, dans laquelle ledit agent de neutralisation présente une acidité, Ka, supérieure à 10⁻⁵ environ.

81. Emulsion de polyétherimide selon la revendication 68, dans laquelle ledit agent de neutralisation est un monoacide.

82. Emulsion de polyétherimide selon la revendication 68, dans laquelle ledit agent de neutralisation est de l'acide lactique ou de l'acide glycolique.

83. Emulsion de polyétherimide selon la revendication 68, dans laquelle la résine polyétherimide comprend un copolymère obtenu par condensation de 2,2-bis(2,3-dicarboxy phénoxy phénol)propane dianhydride avec de la diamine de métaphénylène et un D10 polydiméthylsiloxane à terminaison aminopropyle.

84. Emulsion de polyétherimide selon la revendication 68, comprenant, en outre, la réaction de 50% environ à 80% environ desdites liaisons imides avec ledit agent d'ouverture de cycle.

85. Emulsion de polyétherimide selon la revendication 68, comprenant, en outre, la réaction de 60% environ à 75% environ desdites liaisons imides avec ledit agent d'ouverture de cycle.

86. Emulsion de polyétherimide selon la revendication 85, comprenant, en outre, la neutralisation de 42% environ à 55% environ desdits groupes amines.
